(19) Europäisches Patentamt
European Patent Office
Office européen des brevets

(11) EP 4 226 772 A1

# (12) EUROPEAN PATENT APPLICATION

(43) Date of publication:
**16.08.2023 Bulletin 2023/33**

(21) Application number: **21210046.5**

(22) Date of filing: **23.11.2021**

(51) International Patent Classification (IPC):
***A23L 5/46*** *(2016.01)* ***A23L 2/58*** *(2006.01)*
***A23L 33/18*** *(2016.01)* ***A23L 33/185*** *(2016.01)*
***A23L 33/19*** *(2016.01)*

(52) Cooperative Patent Classification (CPC):
**A23L 5/46; A23L 2/58; A23L 33/18; A23L 33/185; A23L 33/19**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Givaudan SA**
**1214 Vernier (CH)**

(72) Inventor: **The designation of the inventor has not yet been filed**

(74) Representative: **Global Patents**
**Givaudan SA**
**Grafenaustrasse 7**
**6300 Zug (CH)**

## (54) COLOURING COMPOSITION

(57) The present invention provides a food colouring composition, in particular the invention provides a composition or colouring composition comprising at least one phycobilin and at least one peptide, polypeptide and/or protein. In certain embodiments, the phycobilin (such as a Phycocyanin) and the at least one peptide, polypeptide and/or protein form a complex.

EP 4 226 772 A1

## Description

TECHNICAL FIELD OF THE INVENTION

The present invention relates to a food colouring composition, in particular the invention provides a composition or colouring composition comprising at least one phycobilin and at least one peptide, polypeptide and/or protein. In certain embodiments, the phycobilin (such as a Phycocyanin) and the at least one peptide, polypeptide and/or protein form a complex.

The invention also relates to the use of the food colouring composition as described herein in colouring a food product as well as to a food product comprising a food colouring composition as described herein.

BACKGROUND OF THE INVENTION

C-Phycocyanin is a natural pigment-protein complex and is mostly extracted from spirulina platensis biomass. This natural blue pigment has a vibrant blue colour and offers the closest natural alternative to dye brilliant Blue FCF, making it an attractive candidate to replace a wide range of synthetic blue pigments.

Phycocyanin hosts linear tetrapyrrole chromophores called also phycobilins, these chromophores are covalently attached to protein subunits and are the origin of the blue colour.

Thanks to its clean labelling, phycocyanin has been used in different foodstuff applications such as confectioneries, ice cream, desserts toppings and coatings.

However, phycocyanins from spirulina are known to have very weak stability against acidity leading to aggregation and precipitation at pH below 4. In addition, phycocyanin are known to be prone to denaturation upon thermal treatment (eg. Pasteurization) during food processing leading to important colour loss (denaturation T= 47 °C, (Chaiklahan et al, Process biotechnology, 2012, 47: 659-664)).

Consequently, there have been many attempts to improve the stability of phycocyanin to be used as a colouring agent.

WO15090697 reported a method to stabilize of phycocyanobilin with a polyphenol to obtain a stabilized complex, however; this stabilization requires first cleaving the native phycocyanin under thermal or acidic treatment then reacting the chromophore with polyphenols.

In Food Hydrocolloids, Selig et al., January 2018, (74:46-52) then lately Li et al., October 2021 (119:106852) described the enhancement of colour stability of spirulina based phycocyanin via polysaccharide complexes.

Another approach was reported by Zhang et al, in Food Hydrocolloids August 2020, where they described a certain improvement on the colloidal stability of phycocyanin in acidic solutions using whey proteins, however the heat stability was not improved.

The patent document CN111317142 discloses a stable functional phycocyanin multiple emulsion as well as a preparation method and application thereof. The method comprises the following steps: (1) mixing tannic acid, glycerinum, sodium alginate and phycocyanin so as to prepare an internal aqueous phase; (2) adding an emulsifier or biosurfactant into sunflower seed oil, and performing emulsification so as to obtain an oil phase; (3) mixing the internal aqueous phase with the oil phase, performing emulsification so as to obtain a W/O emulsion, and performing solidification so as to obtain a solidified W/O emulsion, wherein the W/O emulsion or the solidified W/O emulsion is taken as a first phase; and (4) adding the first phase into the external aqueous phase to implement emulsification, so as to obtain a phycocyanin W/O/W multiple emulsion. The phycocyanin W/O/W multiple emulsion disclosed by the invention is high in thermochemistry and optical stability, is sensitive to acids, and is good in emulsion stability,

WO2020/239913 describes stabilized phycocyanin composition comprising a complexing agent and an encapsulating agent as stabilizer.

Despite these numerous trials, the stabilization of phycocyanin was not successfully achieved and there is still a growing demand to identify an efficient solution to improve its stability.

SUMMARY OF THE INVENTION

In the present invention, we introduce new alternatives for phycocyanin stabilization using water-soluble plant-based proteins, yeast and animal proteins and peptides characterized by isoelectric point higher than 4.5 or mixtures of them. This stabilization yields a significant improvement of phycocyanin stability against heat and acidity by prevention of aggregation at acidic pH and protects the protein conformation during thermal treatment.

The applicant has surprisingly and unexpectedly found that using water-soluble plant-based proteins, yeast and animal proteins and peptides characterized by isoelectric point higher than 4.5 or mixtures of them phycocyanin is stabilized and does not lose colour hue in acidic conditions and after thermal treatments. For example, and without limitation, a combination of phycocyanins and potato proteins improves the phycocyanin stability. The stability of the

phycocyanin is even increased when soluble proteins (like, for example, potato proteins rich in albumins) are combined with soluble peptides for example from mung bean, soy, rice and/or peas.

This improvement helps to stabilize phycocyanins in beverages and confectionary offering thus a vibrant stable blue colour. With this blend, we can benefit from its clean and non-GMO labelling, good nutritional values and neutral taste and off notes in the final application.

Therefore, in a first aspect, the invention provides a composition comprising at least one phycobilin and at least one protein, polypeptide and/or peptide, wherein the at least one protein, polypeptide and/or peptide is soluble in water, has an isoelectric point (IEP) of more than 4 and/or is soluble in acidic conditions.

In another aspect, the invention provides a complex of at least one phycobilin and at least one protein, polypeptide and/or peptide obtainable by mixing the at least one protein, polypeptide and/or peptide with a composition comprising at least one phycobilins in an aqueous solution.

The invention further provides a process for formation of the composition or complex of any of the preceding aspects, the process comprising the step of mixing at least one peptide, polypeptide and/or protein, or a protein extract comprising at least one peptide, polypeptide and/or protein with a composition comprising at least one phycobilin in an aqueous solution.

The invention further provides a method for stabilizing a phycobilin comprising the steps of:

i) contacting a phycobilin with at least one protein, polypeptide and/or peptide or a protein extract comprising at least one protein, polypeptide and/or peptide in a water solution,

ii) optionally adding sugars.

BRIEF DESCRIPTION OF THE DRAWINGS

Figure1. Assessment of phycocyanin stability against heating in sugar syrup matrix, pH3. Figure 1A Colour pictures and Figure 1B black and white pictures of samples. Sample 1A: 0.025%spirulina extract (25% Phycocyanin w:w) + 99.97%sugar syrup Brix (B) °60, pH3. Sample 1B: 0.025%spirulina extract + 0.15%yeast proteins extract + 99.82%sugar syrup B°60, pH3. Sample 1C: 0.025%spirulina extract + 0.15%whey protein isolate + 99.82%sugar syrup B°60, pH3.Sample 1D: 0.025%spirulina extract + 0.15%potato protein extract + 99.82%sugar syrup B°60, pH3. Sample 1E: 0.025%spirulina extract + 0.075%potato protein extract+0.075%rice peptides + 99.82%sugar syrup B°60, pH3. Sample 1F: 0.025%spirulina extract + 0.15%rice peptides + 99.82%sugar syrup B°60, pH3. Sample 1G: 0.025%spirulina extract + 0.15%Mung bean peptides+ 99.82%sugar syrup B°60, pH3. Sample 1H: 0.025%spirulina extract + 0.075%Mung bean peptides+0.075%potato protein+ 99.82%sugar syrup B°60, pH3. Sample 1I: 0.025%spirulina extract + 0.15%soy peptide +99.82%sugar syrup B°60, pH3. Sample 1j: +0.025%spirulina extract + 0.15%pea peptide +99.82%sugar syrup B°60, pH3.
Samples R: reference samples (without treatment). Samples T: treatment at 80°C for 30min.

Figure 2: Figure 2A. Stability of phycocyanin (A: control: 0.025%spirulina phycocaynin, B: 0.025%spirulina phycocyanin+0.075% mung bean peptide+0.075%potato protein) in sugar syrup pH3 without thermal treatment (T0) and after thermal treatment at 80°C for 5min, 10min, 20min, and 30min (60°Brix, pH3) (1) shows visual loss of colour in function of time; phcocyanin degradation kinetics are displayed in graph (Figure 2B): triangles: control, circles: spirulina extract + mung bean peptide and potato protein.

Figure 3. Whey protein. A: 0.1%spirulina extract+0.2% Whey protein isolate. B: 0.1%spirulina extract. C:0.1%spirulina extract+0.2% potato protein. AT, BT and CT: Samples A, B and C with a thermal treatment at 95°C for 5 minutes.

Figure 4. 4A: Heat and colloidal stability (pH3) after thermal treatment results. Pictures of the samples in colour (up) and black and white (down). A: 0.15%spirulina extract+0.05% Potato protein extract. B: 0.15%spirulina extract+0.025% potato protein extract +0.025%mung bean peptides. C: 0.15%spirulina extract. (AT, BT and CT, samples A, B and C after thermal treatment) Figure 4B. Evolution of the LIGHT stability after 13 days of samples A, B and C after thermal treatment. Figure 4C. Samples AT, BT and CT (samples treated with heat treatment) were exposure to light for 13 days. Pictures of the samples AT, BT and CT before (day 0) and after light exposure (day 13) in colour (up) and black and white (down).

Figure 5A. Samples: 5A: 0.2%Bovine Serum Albumin+0.025% spirulina extract, 5B: 0.1% Bovine Serum Albumin+0.025% spirulina extract. 5C: 0.05%Bovine Serum Albumin+0.025% spirulina extract. 5D: 0,025% spirulina

extract / CONTROL. 5E: 0,05% chicken egg white+0.025% spirulina extract. 5F: 0.1% chicken egg white+0.025% spirulina extract. 5G: 0. 2% chicken egg white+0.025% spirulina extract. Figure 5B: Evolution of phycocyanin retention in function of bovine serum concentration (left) and evolution of phycocyanin retention in function of chicken egg albumin concentration (right), conditions: heating at 80°C, at pH 3 in sugar syrup 60°brix for 30 min.

As we can see from figure 5(A), samples containing chicken egg albumin and bovine serum albumin showed better colour retention compared to control sample. Increasing the concentration of albumin improved the retention of phycocyanin.

## DEFINITIONS

As used herein, the term "colouring composition" refers to any substance that imparts colour by absorbing or scattering light at different wavelengths.

The term "colour" refers to the colour properties such as hue, chroma, purity, saturation, intensity, vividness, value, lightness, brightness and darkness, and colour model system parameters used to describe these properties, such as Commission Internationale de l'Eclairage CIE 1976 CIELAB colour space L*a*b* values.

The term "hue" refers to the colour property that gives a colour its name, for example, red, blue and brown.

## DETAILED DESCRIPTION

The following text sets forth a broad description of numerous different embodiments of the present disclosure. The description is to be construed as exemplary only and does not describe every possible embodiment since describing every possible embodiment would be impractical, if not impossible. It will be understood that any feature, characteristic, component, composition, ingredient, product, step or methodology described herein can be deleted, combined with or substituted for, in whole or part, any other feature, characteristic, component, composition, ingredient, product, step or methodology described herein. Numerous alternative embodiments could be implemented, using either current technology or technology developed after the filing date of this patent, which would still fall within the scope of the claims.

Preferred and/or optional features of the invention will now be set out. Any aspect of the invention may be combined with any other aspect of the invention unless the context demands otherwise. Any of the preferred or optional features of any aspect may be combined, singly or in combination, with any aspect of the invention, as well as with any other preferred or optional features, unless the context demands otherwise.

### Compositions

Surprisingly, it was found that by combining water soluble peptides, polypeptide and/or proteins with at least one phycobilin (such as a Phycocyanin), the phycobilins (such as a Phycocyanin) are stable to acidic, thermal treatments and light exposure.

Therefore, the invention provides a composition or colouring composition comprising at least one phycobilin and at least one peptide, polypeptide and/or protein. In certain embodiments, the phycobilin (such as a Phycocyanin) and the at least one peptide, polypeptide and/or protein form a complex.

Without being bound to any particular theory, the complex between the phycobilin (such as a Phycocyanin) and the soluble proteins, polypeptides and/or peptides improves the stability of the phycobilin (such as a Phycocyanin) against heat and acidity by prevention of aggregation at acidic pH and protects the protein conformation during thermal treatment. Thus, the colouring compositions described herein provide a colour such as a blue colour that is stable to light, heat and/or acidic conditions.

The present invention provides a composition (or "composition of the invention" or "colouring composition of the invention") comprising at least one phycobilin and at least one protein, polypeptide and/or peptide, wherein the at least one protein, polypeptide and/or peptide is soluble in water and optionally, has an IEP of more than 4 and/or is soluble in acidic conditions

The invention also provides a complex comprising at least one phycobilin and at least one peptide, polypeptide and/or protein obtainable by mixing the at least one peptide, polypeptide and/or protein with a composition comprising at least one phycobilin in an aqueous solution.

In certain embodiments, the at least one protein, polypeptide and/or peptide is soluble in water, has an IEP of more than 4 and/or is soluble in acidic conditions.

### Phycobilins

Phycobilins are light-harvesting pigments found in cyanobacteria, but that are not present in higher plants. The

fundamental structure of phycobilins consists of a tetrapyrrole unit, in which the four pyrrole rings form an open chain. There are four major phycobilins in photosynthetic organisms, phycoerythrobilin, phycocyanobilin, phycoviolobilin and phycourobilin. Differences in the extent of π-electron conjugation are responsible for the distinct absorption spectral properties and colouration of the chromophores. Phycoerythrobilin appears red, phycocyanobilin is blue, phycoviolobilin is purple, and phycourobilin is yellow coloured.

Therefore, the phycobilins used in the present invention may be selected from phycoerythrobilin, phycocyanobilin, phycoviolobilin, phycourobilin and any mixture thereof.

In certain embodiments the phycobilin is a phycocyanobilin such as a Phycocyanin, allophycocyanin and phycoerythrin.

In certain embodiments, the phycobilin in the present invention may be phycocyanobilin, optionally which has a blue colour.

The phycobiliproteins are made of two subunits (alpha and beta) having a protein backbone to which 1-2 linear tetrapyrrole chromophores are covalently bound.

In certain embodiments, the phycobilin is a phycocyanin.

In certain embodiments, the phycocyanin is R-Phycocyanin and/or C-Phycocyanin.

The phycobilins (such as phycocyanins) used in the present invention may be of natural or synthetic origin.

The phycocyanins in the present invention may be of obtained or obtainable from any source that contains such proteins, like certain species of cyanobacterias (also called blue-green algae).

In certain embodiments, the phycocyanin is obtained from *Arthrospira platensis* (also named as Spirulina), *Arthrospira fusiformis, Arthrospira maxima, Galdieria daedala, Galdieria sulphuraria, Galdieria maxima, Galdieria partita, Cyanidioschyzon merolae 10D, Cyanidioschyzon merolae DBV201, Cyanidium caldarium, Cyanidium rumpens, Cyanidium daedalum, Cyanidium maximum, Cyanidium partitum,* and any mixtures thereof.

In certain embodiments, the Phycocyanin is a cyanobacteria Phycocyanin.

In one embodiment, the phycobilin (such as a Phycocyanin) is a spirulina (*Arthrospira platensis*) derived colour.

In one embodiment, the phycobilin (0.1% in water) (such as a spirulina derived Phycocyanin) has a L* value of 66.23 +/-5%, a* value of -33.1 +/-5% and b* value of -47.52 +/- 5%.

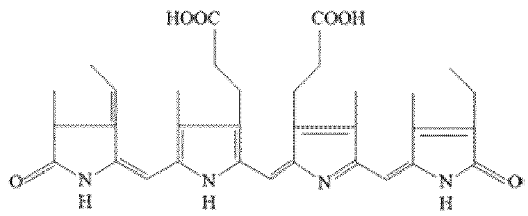

Phycocyanobilin basic structure

In certain embodiments, the phycobilin (such as a Phycocyanin) may be an extract comprising said phycobilin (such as a Phycocyanin) or a purified phycobilin (such as a purified Phycocyanin).

Purified phycobilin (such as a purified Phycocyanin) means in the present invention a phycobilin (such as a Phycocyanin) with a purity of at least 80% w/w of phycobilin (such as a Phycocyanin), such as at least 85%, such as at least 90%, such as at least 95%, or such as at least 99% w/w.

Natural extracts may be obtained from the organisms mentioned before, such as *Arthrospira platensis* extract *or* Spirulina extract, a *Galdieria daedala* extract, a *Galdieria sulphuraria* extract, a *Galdieria maxima* extract, etc.

Extracts may be done by any method known in the art that permits a certain degree of purity of the phycobilin (such as Phycocyanin).

The phycobilin (such as Phycocyanin) may be extracted using water as solvent. Different buffering systems may be used to improve the yield of extraction. For example, some aqueous 1.5% $CaCl_2$ solution may be used and may led to higher extraction yield when compared to distilled water and sodium-phosphate buffer (pH 7.0). Also sodium phosphate buffer (pH 7.0), distilled water, NaCl solution (0.15 M) and $CaCl_2$ solution (10 g L-1) may be used (Silveira, S.et al. 2007. Optimization of phycocyanin extraction from Spirulina platensis using factorial design. Bioresource Technology, 98(8), 1629-1634) In certain embodiments, acetate buffer (pH 5.0) may be also used (Ilter, I., et al. 2018. Optimization of phycocyanin extraction from Spirulina platensis using different techniques. Journal of Food Composition and Analysis, 70, 78-88.).

The water extraction could be assisted with further processing such as homogenization, bead milling, high-pressure homogenization, Microwave treatment, Ultrasound treatment, pulsed and moderate electric fields (D-P. Jaeschke, et al. 2021. Phycocyanin from Spirulina: A review of extraction methods and stability. Journal of Food Research International, 143, 110314).

Phycobilin extracts (such as a Phycocyanin extracts) may comprises at least 2% (w/w), such as at least 5% (w/w), such as at least 10% (w/w), such as at least 20% (w/w), such as at least 30% (w/w), such as at 40% (w/w), or such as at least 50% (w/w) of phycocyanin.

In a certain embodiment of the present invention the amount of phycobilin (such as Phycocyanin) present in the composition or complex is at least 0.5% (w/w), such as at least 0.7% (w/w), such as at least 0.9% (w/w), such as at least 1% (w/w), such as at least 1.5% (w/w), such as at least 2% (w/w), such as at least 2.5% (w/w), or such as at least 3% (w/w).

In a preferred embodiment of the present invention the amount of phycobilin (such as Phycocyanin) present in the composition or complex of the invention is less than 50% (w/w), such as less than 40%, such as less than 25% (w/w), such as less than 20% (w/w) such as less than 15% (w/w), such as less than 13% (w/w), such as less than 10% (w/w), such as less than 9% (w/w), such as less than 8% (w/w), such as less than 7% (w/w), such as less than 6% (w/w), such as less than 5% (w/w), such as less than 4% (w/w), or such as less than 3% (w/w).

In a particular embodiment of the present invention, the amount of phycocyanin present in the composition or complex is between 0.5 to 30% (w/w), such as between 0.5 to 20% (w/w), such as between 0.5 to 12% (w/w), such as between 0.5 and 5% (w/w), such as between 0.8 and 3% (w/w), such as between 1 to 20% (w/w), such as between 2 to 12% (w/w), or such as between 3 to 5 % (w/w).

In a particular certain embodiments of the present invention the phycocyanin is not cleaved.

Phycobilin stabilizing peptides, polypeptides and proteins

The present invention shows how proteins, peptides and combinations of proteins, peptides and polypeptides form stabilizing complexes with phycobilins (such as phycocyanins) stabilizing them.

Without wishing to be bound by theory, it is believed that the at least one phycobilin (such as a phycocyanin) and the at least one protein, polypeptide and/or peptide forms a complex that protects the at least one phycobilin (such as a phycocyanin) so that the phycobilin (such as a phycocyanin) does not precipitate in acidic conditions, during a heat treatment and during light exposure.

Such interactions would confer unexpected and unpredictable properties to the resulting composition and complexes comprising at least one phycobilin (such as a phycocyanin) and the at least one protein, polypeptide and/or peptide.

In certain embodiments, additionally certain amount of free amino acids may be present.

Proteins are large biomolecules and macromolecules that comprise one or more long chains of amino acid residues. A linear chain of amino acid residues (with an absence of a defined conformation) is called a polypeptide. A protein contains at least one long polypeptide.

Protein is generally used to refer to the complete biological molecule in a stable conformation, whereas peptide and polypeptide is generally reserved for short amino acid oligomers often lacking a stable 3D structure.

Most proteins fold into unique 3D structures. The shape into which a protein naturally folds is known as its native conformation.

The different structures of a protein are:

- Primary structure: the amino acid sequence.
- Secondary structure: regularly repeating local structures stabilized by hydrogen bonds. The most common examples are the α-helix, β-sheet and turns. Because secondary structures are local, many regions of different secondary structure can be present in the same protein molecule.
- Tertiary structure: the overall shape of a single protein molecule; the spatial relationship of the secondary structures to one another. Tertiary structure is generally stabilized by nonlocal interactions, most commonly the formation of a hydrophobic core, but also through salt bridges, hydrogen bonds, disulfide bonds, and even posttranslational modifications. The term "tertiary structure" is often used as synonymous with the term fold. The tertiary structure is what controls the basic function of the protein.
- Quaternary structure: the structure formed by several protein molecules (polypeptide chains), usually called protein subunits in this context, which function as a single protein complex.

In certain embodiments, the proteins may have a primary, a secondary, a tertiary or a quaternary structure.

In certain embodiments the proteins are from animal, vegetal, yeast and/or bacteria origin.

In certain embodiments, the proteins are fully or partially denatured (i.e. has lost partially or completely the secondary, a tertiary or a quaternary structure) thus forming a polypeptide.

In certain embodiments, the proteins are hydrolyzed and the result of the hydrolysis are peptides and/or polypeptides of different sizes.

In the present invention the term "polypeptide" is understood as a linear chain of amino acid residues with an

absence of a defined conformation. Polypeptides may be originating from one of more proteins that are denaturized and/or hydrolyzed.

In the present disclosure, the term "peptide" or "oligopeptide" is understood to indicate short chains of amino acids. Peptides in the present invention may be originated from one or more proteins, for example from hydrolysis of one or more proteins, In certain embodiments, the "peptides" or "peptide material" is understood to indicate a protein hydrolysate and may contain all types of peptides that may vary in length as well as a certain amount of free amino acids resulting from the hydrolysis. The protein raw material may be hydrolyzed by any means known in the art, such as with one or more hydrolytic enzymes. In one example, enzyme preparations are used which have a low exo-peptidase activity to minimize the liberation of free amino acids and to improve taste profiles of the protein hydrolysates. In certain embodiments, the peptide material has a molecular weight of from about 300 to about 10,000 daltons and in another embodiments from about 300 to about 5,000 daltons, such as from 300 to 2000 daltons, such as from 300 to 1000 daltons, such as from 500 to 1000 daltons, or such as from 500 to 2000 daltons.

In certain embodiments, the peptides contain less than 40 residues, such as less than 30 residues.

Proteins, polypeptides and peptides of synthetic origin may be also used in the present invention.

Protein hydrolysis may be carried out by chemical and enzymatic methods. Most of the enzymes used for protein hydrolysis are from animal sources (such as pancreatin and pepsin), plant sources (such as papain from papaya, ficin from fig, and bromelain from pineapple), and microbial sources (such as Alcalase).

Proteolytic enzymes hydrolyze proteins at the optimum temperature and pH and usually target specific peptide cleavage bonds, resulting in digestion consisting of amino acids and peptides of varying size. Enzymes from animal sources are more specific to their site of action compared to plant enzymes, which are more broadly specific in their action. For example, the enzyme pepsin will cleave at the phenylalanine or leucine bond. Papain has a broad specificity, cleaving bonds at phenylalanine, arginine, and lysine. Pancreatin cleaves at tryptophan, arginine, tyrosine, leucine, phenylalanine, and lysine bonds.

The hydrolysation of the protein can be performed enzymatically or by adding a sufficient amount of acid, or by a combination of enzyme(s) (proteinase and peptidase activity) and acid. For example, if hydrochloric acid is used, it is used in an end concentration in the hydrolysation mixture of 5.5M. Other acids can be used in an amount to give a similar pH as 5.5M hydrochloric acid does accordingly.

For enzymatic hydrolysation, an enzyme or enzyme preparation containing more than one enzyme and having both proteinase and peptidase activity is used at a suitable temperature for the one or more enzyme. A suitable temperature will be chosen according to the temperature requirements of the enzymes, for example, UMAMIZYME™ will tolerate temperatures from about 40°C to about 60°C, with an optimum at around 55°C. A useful enzyme is a protease enzyme preparation, for example UMAMIZYME™ (Amano, Elgin, IL). Protease preparations contain two types of enzymes; proteinases, which hydrolyze proteins to form small peptides, and peptidases, which release amino acids from the terminal ends of proteins and peptides. UMAMIZYME™ originates from *Aspergillus oryzae* and is rich in Endo & Exo activity.

All enzymes used should be food-grade. The amount or units of the enzymes needed are chosen to ensure sufficient activity and avoid developing bitter notes. The amount of enzyme depends on the amount of protein and there should be a ratio of 0.5:20 to 3:20 of enzyme:protein (0.5 to 3 parts enzyme for 20 parts of pea protein), for example 1:20 of enzyme:protein (UMAMIZYME™ has 70 U/g at pH 7).

In the acid hydrolysation, acids may be used including, for example, one or more of hydrochloric acid, lactic acid, phosphoric acid, and citric acid. The hydrolysation is performed at a suitable temperature, for example from about 50°C to about 70°C.

Another alternative is a combination of acid hydrolysis and enzymatic hydrolysis. In this case, acid, enzyme, pH and temperature need to be chosen so that they are compatible. The relevant data is known and readily available for a large number of proteinase and peptidase enzymes.

The acid hydrolysis is a possibility but has a disadvantage as a small amount of salt is added when neutralizing the acid. The resulting salt enhancer will still be useful for salt reduced products but the reduction potential may be slightly limited. More importantly, the contaminant 3-chloropropane-1,2-diol (3-MCPD) and other mono- and di- chloropropanol contaminants may be formed, which has been in discussion for potential adverse health effect, so consumers tend to avoid products containing or potentially containing 3-MCPD.

In certain embodiments, the proteins, polypeptides and/or peptides may be obtained by fermentation processes. Different bacterial strains may be used to ferment proteins (for example plant proteins) to obtain a protein and peptides enriched product. In certain embodiments, the most of the carbohydrate molecules are then removed during the fermentation obtaining a high protein and/or high peptide product.

In certain embodiments, the fermented protein, polypeptides and/or peptides may be prepared by methods well-known in the art. The protein source, *e.g.*, the plant protein sources described herein such as tubers (such as potato), seeds (such as peas, soy), beans (such as mung beans) cereals (such as rice) etc, may be grown overnight, for example 12 hours, at the appropriate temperature for the microorganism used. For example *Lactobacillus,* such as

*L. plantarum, L. casei, L. brevis and L. helveticus* may be used. 37°C is a suitable temperature for *L. plantarum.* Any suitable medium may be selected, for example MRS broth (Difco, United States of America).

The fermentation with the microorganisms (such as *Lactobacillus*) is started using the hydrolyzed protein as fermentation broth and adding a sufficient volume of an overnight protein source (such as potato, mung beans etc) culture at a pH of at least 6 or higher, for example a pH of 6 to 7. Fermentation is allowed to proceed until the pH has lowered to at least pH 5.5 or lower, for example pH 5.5 to pH 4.5, which usually takes about 5 to 12 hours. The fermentation temperature is chosen to accommodate the microorganism. Useful temperature ranges for Lactobacilli and in particular *L. plantarum* include, for example, from about 20°C to about 40°C, from about 30°C to about 40°C, or from about 35 to about 40°C, with an optimum around 36°C to 38°C. At a low temperature the growth rate will be low, at a high temperature the microorganism will be killed.

After fermentation (once a low pH is reached) the fermentation broth is pasteurized at 90°C for 30 minutes to inactivate microorganisms and enzymes.

Afterwards, the pasteurized fermentation broth may be filtered to remove any larger particles and may be concentrated, for example by evaporation, including boiling at for example up to 100°C.

In certain embodiments, the at least one protein, polypeptide and/or peptide are water soluble and/or have an IEP of more than 4, such as more than 4.5, 5, 5.5, 6, 6.5, 7, or such as more than 7.5.

The term "water soluble" is understood to indicate that at least 50%, such as at least 60%, 70%, 80%, 90%, or such as 99% of the one or more proteins, polypeptides, peptides or mixtures thereof are soluble in water, that is the protein, polypeptide and/or peptide do not precipitate after a certain period of time, such as at least 1 day, at least 10 days, at least 30 days, at least 2 months, or such as at least 9 months.

In certain embodiments, if a mixture of different proteins, polypeptide and/or peptide is used in the composition or complex of the invention, at least 50% of said proteins, polypeptides and/or peptides are soluble in water, such as at least 60%, 70%, 80%, 90% or such as at least 99%. In a preferred embodiment, at least 80% of the proteins, polypeptides and/or peptides used in the composition or complex of the invention are water soluble.

In certain embodiments, the at least one protein, polypeptide and/or peptide are soluble in acidic conditions such as soluble at a pH of less than 6, less than 5, less than 4, less than 3, or less than 2. In certain embodiments, if a mixture of different proteins, polypeptide and/or peptide is used in the composition or complex of the invention, at least 50% of said proteins, polypeptides and/or peptides are soluble in acidic conditions, such as at least 60%, 70%, 80%, 90% or such as at least 99%.

The isoelectric point (IEP) is the pH value where the zeta potential is zero for a certain protein or polypeptide. IEP may be measured using a zetasizer, upon displaying the evolution of zetapotential in function of pH the IEP can be attributed to zero value of zeta potential

In certain embodiments, the protein is selected from albumins, globulins, glutelines, prolamines, lectin, gliadin, tuberine, patatin and any other soluble protein from plant, animal or yeast origin as well as any mixtures thereof. As mentioned before, preferably the albumins, globulins, glutelines, prolamines, lectin, gliadin, tuberine, patatin, and any other soluble protein from plant, animal or yeast origin as well as any mixtures thereof present in the composition of complex of the invention are soluble in water. In certain embodiments, at least 50% of the albumins, globulins, glutelines, prolamines, lectin, gliadin, tuberine, patatin and mixtures thereof are soluble in water, such as at least 60%, 70%, 80%, 90% or such as at least 99% of the albumins, globulins, glutelines, prolamines, lectin, gliadin, tuberine, patatin and mixtures thereof are soluble in water. In a preferred embodiment, at least 80% of albumins, globulins, glutelines, prolamines, lectin, gliadin, tuberine, patatin and mixtures thereof used in the composition or complex of the invention are water soluble.

In certain embodiments the composition or complex of the invention comprises only water soluble albumins, globulins, glutelines, prolamines, lectin, gliadin, tuberine, patatin, and any other soluble protein from plant, animal or yeast origin and mixtures thereof and optionally comprises water soluble polypeptides and/or water soluble peptides derived therefrom.

In certain embodiments the composition or complex of the invention comprises water soluble albumins, globulins, glutelines, prolamines, lectin, gliadin, tuberine, patatin and mixtures thereof, any other soluble protein from plant, animal or yeast origin, any mixture thereof and water soluble poplypeptides and/or peptides derived therefrom (*i.e.* derived from albumins, globulins, glutelines, prolamines, lectin, gliadin, tuberine, patatin and mixtures thereof).

In certain embodiments the composition or complex of the invention comprises water soluble poplypeptides and/or water soluble peptides derived from one or more of: albumins, globulins, glutelines, prolamines, lectin, gliadin, tuberine, patatin and any other protein from plant, animal or yeast origin.

Albumins are water-soluble, globular proteins found in both animals and plants. Examples of albumin protein sequences are cited in the literature. For example, without limitation, potato albumin entries in UniProt are M0ZKG8_SOLTU and M0ZKI9_SOLTU.

There are currently two main entries for mung bean albumin in the UniProt Database; Q9FRT8 is a reviewed entry detailing a 10 kDa protein fragment and Q43680 is a non-reviewed entry detailing a 30 kDa protein. Also some

albumin-like proteins have been reported in the UniProt database: A0A1S3U7A2, A0A1S3W1Y8, A0A1S3W1L3, A0A1S3THU2, A0A1S3VX99, A0A1S3UZE0, A0A1S3VUC6, A0A1S3V3Y6, A0A1S3V3H6, A0A1S3V3D6, and A0A1S3UZ12.

Different Pea (Pisum sativum) albumins have been reported in the UniProt Database: P62931, P62929, P62928, P62927, P62926, D4AEP7, and P62930.

In certain embodiments, the albumins, globulins, glutelines, prolamines, lectin, gliadin, and any other protein from plant, animal or yeast origin and any mixtures thereof are water soluble and/or have an IEP of more than 4, such as 4.5, 5, 5.5, 6, 6.5, 7, or such as more than 7.5.

By "at least one protein" in the present invention is understood that the composition of the invention or the complex of the invention may comprise only one type of proteins (such as only albumins or albumin like proteins) or a complex mixture of proteins (such as a mixture of proteins such as for example albumin and glutelins).

It is understood that the compositions and complexes of the invention may comprises one or more proteins, polypeptides and /or peptides and thus the mixtures of proteins, polypeptides and /or peptides may comprise one single type or different types of proteins, polypeptides and /or peptides. In certain embodiments, the polypeptides and peptides may be originated from the same protein or from a different protein (for example the protein is an albumin and the peptides are originated from globulins and glutelins).

According to certain illustrative embodiments, the protein is one or more albumins, and optionally polypeptides and/or peptides derived from said albumins.

According to certain illustrative embodiments, the protein is one or more albumins, and optionally polypeptides and/or peptides derived from a different protein (such as globulins, glutelines, prolamines, lectin, gliadin, tuberine, patatin and mixtures thereof).

As already mentioned before, the proteins, polypeptides and /or peptides may be of natural or synthetic origin.

In certain embodiments, the proteins, polypeptides and/or peptides are from vegetal or animal origin and optionally are water soluble and/or have an IEP of more than 4, such as 4.5, 5, 5.5, 6, 6.5, 7, or such as more than 7.5,

In certain embodiments the proteins, polypeptides and/or peptides are plant derived proteins, plant derived polypeptides and/or plant derived peptides. The proteins, polypeptides and /or peptides may be derived from any part of the plant containing proteins (leaves, stems, grains, fruits, tuber, etc) and are water soluble and/or have an IEP of more than 4, such as 4.5, 5, 5.5, 6, 6.5, 7, or such as more than 7.5.

According to certain illustrative embodiments, the at least one plant-derived protein, polypeptides and/or peptides (such as albumins, polypeptides and/or peptides derived from albumin) may be derived from tubers including but not limited to potatoes (Solanum tuberosum) and any of the 4000 described varieties of potato such as such as russet potatoes (rough brown skin), red potatoes, white potatoes, yellow potatoes (also called Yukon potatoes) and purple potatoes, sweet potato (Ipomoea batatas), manioc or yucca (Manihot esculenta), dahlia, carrot (Daucus carota subsp. sativus), radish, beetroot, etc and from rhizomes such as ginger, bamboo, etc.

According to certain illustrative embodiments, the at least one plant-derived protein, polypeptides and/or peptides (such as albumins, polypeptides and/or peptides derived from albumin) may be derived from beans, including but not limited to mung beans, black beans, canelli beans, kidney beans, lentil beans, lima beans, pinto beans, soy beans, white beans, and mixtures thereof.

According to certain illustrative embodiments, the at least one plant-derived protein, polypeptides and/or peptides (such as albumins, polypeptides and/or peptides derived from albumin) may be derived from a nuts including but not limited to almonds, brazil nuts, cashews, peanuts, pecans, hazelnuts, pine nuts, walnuts and mixtures thereof

According to certain illustrative embodiments, the at least one plant-derived protein, polypeptides and/or peptides (such as albumins, polypeptides and/or peptides derived from albumin) may be derived from plant seeds including but not limited to chia, flax, hemp, pumpkin, sesame, sunflower and mixtures thereof.

According to certain illustrative embodiments, the at least one plant-derived protein, polypeptides and/or peptides (such as albumins, polypeptides and/or peptides derived from albumin) may be derived from cereals including but not limited to oatmeal, wheat, barley, spelt, corn, rice and mixtures thereof.

According to certain illustrative embodiments, the at least one plant-derived protein, polypeptides and/or peptides (such as albumins, polypeptides and/or peptides derived from albumin) are water soluble and/or have an IEP of more than 4, such as 4.5, 5, 5.5, 6, 6.5, 7, or such as more than 7.5; and may be derived from:

a) tubers including but not limited to potatoes *(Solanum tuberosum)* and any of the 4000 described varieties of potato such as such as russet potatoes (rough brown skin), red potatoes, white potatoes, yellow potatoes (also called Yukon potatoes) and purple potatoes, sweet potato (*Ipomoea batatas*), manioc or yucca (*Manihot esculenta*), dahlia, carrot (*Daucus carota subsp. sativus*), radish, beetroot, etc;

b) beans including but not limited to beans selected from black beans, canelli beans, kidney beans, lentil beans, lima beans, pinto beans, soy beans, white beans, mung beans, fava beans and mixtures thereof,

c) nuts including but not limited to from almonds, brazil nuts, cashews, peanuts, pecans, hazelnuts, pine nuts, walnuts, pistachios, and mixtures thereof,

d) from plant seeds including but not limited to from chia, flax, hemp, pumpkin, sesame, sunflower, quinoa, chickpeas, green peas, peas, oilseed rape/canola and mixtures thereof,

e) from cereals including but not limited to oat, wheat, barley, spelt, corn, rice and mixtures thereof, and /or

f) any other part of the plant rich in proteins.

According to certain illustrative embodiments, the at least one plant-derived protein is selected from albumins, globulins, glutelines, prolamines, lectin and/or gliadin (and polypeptides and/or peptides derived therefrom) and may be derived or obtained from:

a) tubers including but not limited to potatoes (*Solanum tuberosum*) and any of the 4000 described varieties of potato such as such as russet potatoes (rough brown skin), red potatoes, white potatoes, yellow potatoes (also called Yukon potatoes) and purple potatoes, sweet potato (*Ipomoea batatas*), manioc or yucca (*Manihot esculenta*), dahlia, carrot (*Daucus carota subsp. sativus*), radish, beetroot, etc;

b) beans including but not limited to black beans, canelli beans, kidney beans, lentil beans, lima beans, pinto beans, soy beans, white beans, mung beans, fava beans and mixtures thereof,

c) nuts including but not limited to almonds, brazil nuts, cashews, peanuts, pecans, hazelnuts, pine nuts, walnuts, pistachios, and mixtures thereof,

d) plant seeds including but not limited to chia, flax, hemp, pumpkin, sesame, sunflower, quinoa, chickpeas, green peas, peas, oilseed rape/canola and mixtures thereof,

e) cereal including but not limited to oat, wheat, barley, spelt, corn, rice and mixtures thereof,

and mixtures thereof.

In certain embodiments, the protein is a natural extract (such as animal and/or vegetal origin) that comprises at least 30%, 40%, 50%, 60%, 70%, 80%, at least 90% such as at least 99% of a single type of proteins (such as albumins) or a mixture of proteins (such as albumins or albumin like proteins and/or glutelines).

In certain embodiments, the protein is one or more albumins, from one or more plant and/or animal sources described previously (such as potato albumins).

In certain embodiments, the composition of the invention or the complex of the invention comprises at least one animal and/or plant albumins, such as potato albumins, and optionally comprises polypeptides and/or peptides derived thereof (i.e. polypeptides and/or peptides derived from the albumin, such as potato albumin derived polypeptides and/or peptides).

In certain embodiments, the composition of the invention or the complex of the invention comprises at least one animal and/or plant albumins, such as potato albumins, mung bean albumins, pea albumins, soy albumins, egg albumins etc, and optionally comprises polypeptides and/or peptides derived from mung beans, peas, soy and / or rice with a molecular weight of from 300 to about 5,000 daltons, such as from 300 to 2000 daltons, such as from 300 to 1000 daltons, such as from 500 to 2000 daltons, such as from 500 to 1000 daltons.

In certain embodiments, the composition of the invention or the complex of the invention comprises potato albumins and polypeptides and/or peptides derived from peas with molecular weights ranging from 500Da to 3000Da, with a majority between 800 to 2000 Da.

In certain embodiments, the composition of the invention or the complex of the invention comprises potato albumins and polypeptides and/or peptides derived from soy with molecular weights ranging from 200Da to 2000Da, with a majority between 300 to 1000 Da.

In certain embodiments, the composition of the invention or the complex of the invention comprises a potato extract rich in proteins and an extract of pea rich in polypeptides and/or peptides with molecular weights ranging from 500Da to 3000Da, with a majority between 800 to 2000 Da.

In certain embodiments, the composition of the invention or the complex of the invention comprises a potato extract rich in proteins and an extract of soy rich in polypeptides and/or peptides with molecular weights ranging from 200Da to 2000Da, with a majority between 300 to 1000 Da.

In certain embodiments of the compositions and complexes of the invention, the ratio between the at least one

proteins and peptides is from about 100:1 to 1:100, such as 90:10, 80:20; 70:30, 60:40, 50:50, 40:60, 30:70, 20:80, or 10:90. In certain embodiments of the compositions and complexes of the invention, the ratio between the at least one phycobilin (such as a Phycocyanin) to the at least one proteins, polypeptides and/or peptides is from about 10:1 to about 1:10, such as from about 5:1 to about 1:5, such as 1:1, 1:2, 1:3, 3:1, 2:1, 0.5:1, or about 0.8:2.

In a preferred embodiment of the compositions and complexes of the invention, the ratio between the at least one phycobilin (such as a Phycocyanin) to the at least one proteins, polypeptides and/or peptides is from about 50:1 to about 1:50, such as from about 40:1 to about 1:40, such as such as from about 30:1 to about 1:30, such as from about 20:1 to about 1:20, such as from about 10:1 to about 1:10, such as 1:1, 1:2, 1:3, 3:1, 2:1, 0.5:1, or about 0.8:2.

In certain embodiments, the composition or the complex of the invention comprises: 0.25% spirulina extract with 25% of total phycocyanin and 1.5% mung bean peptides, optionally the mung bean peptides having a molecular weight of from 300 to about 5,000 daltons, such as from 300 to 2000 daltons, such as from 300 to 1000 daltons, such as from 500 to 2000 daltons, such as from 500 to 1000 daltons.

In certain embodiments, the composition or the complex of the invention comprises: 0.025%spirulina extract with 25% w/w of total phycocyanin, 0.075% potato protein extract with at least 90%w/w of proteins and 0.075% rice peptides with at least 80%w/w of peptides, optionally the rice peptides having a molecular weight of from 300 to about 5,000 daltons, such as from 300 to 2000 daltons, such as from 300 to 1000 daltons, such as from 500 to 2000 daltons, such as from 500 to 1000 daltons and the potato protein comprises albumins.

In certain embodiments, the composition or the complex of the invention comprises 0.025%spirulina extract with 25% w/w of total phycocyanin, 0.075% potato protein extract with at least 90%w/w of proteins and 0.075% mung bean extract rich in peptides with at least 80%w/w of peptides, optionally the mung bean peptides having a molecular weight of from 300 to about 5,000 daltons, such as from 300 to 2000 daltons, such as from 300 to 1000 daltons, such as from 500 to 2000 daltons, such as from 500 to 1000 daltons and the potato protein comprises albumins.

The present invention also relates to a composition comprising

i) at least one phycobilin (such as a phycocyanobilin) and

ii) at least one protein extract comprising one or more peptide, polypeptide and/or proteins, wherein the at least one protein, polypeptide and/or peptide is soluble in water, have an IEP of more than 4 and /or are soluble in acidic conditions.

The present invention also relates to a complex comprising

i) at least one phycobilin (such as a phycocyanobilin) and

ii) at least one protein extract comprising one or more peptide, polypeptide and/or proteins obtainable by mixing the at least one protein extract with a composition comprising at least one phycocyanobilin in an aqueous solution, wherein the at least one protein, polypeptide and/or peptide is soluble in water, have an IEP of more than 4 and /or are soluble in acidic conditions.

Protein extracts may be of animal, plant, yeast and/or bacterial origin. In a preferred embodiment, the protein extract is from animal and/or plant origin.

"A plant protein extract" (such as "a potato protein extract", a "mung bean protein extract" , "a rice protein extract", etc) is understood in the present invention as an extract obtained or obtainable from a plant or a part of the plant (such as a potato, mung beans, rice, pea and any other plant) that comprises proteins, polypeptides and/or peptides.

In certain embodiments, the protein extract (such as a plant and/or animal protein extract) comprises at least 30% w/w, 40% w/w, 50% w/w, 60% w/w, 70% w/w, 80% w/w, at least 90% w/w such as at least 99% w/w of peptides, polypeptide and/or proteins.

In a preferred embodiment, the protein extract (such as a plant and/or animal protein extract, such as a potato protein extract, mung bean protein extract, rice protein extract, pea protein extract) is rich in proteins. In certain embodiments, the extract (such as a plant and/or animal protein extract) is rich in polypeptides and/or peptides.

"Rich in proteins" or "enriched in proteins" in the present invention means that the plant or animal protein extract (such as a potato protein enriched extract, mung bean protein enriched extract, rice protein enriched extract, pea protein enriched extract) comprises at least 50%, such as at least 60%, 70%, 80%, or at least 90% such as at least 99% w/w of proteins. In certain embodiments, the plant or animal enriched protein extract is water soluble and/or soluble in acidic conditions, and optionally have an IEP of more than 4, such as mora than 4.5, 5, 5.5, 6, 6.5, 7, or such as more than 7.5;

"Rich in peptides" or "enriched in peptides" in the present invention means that the plant or animal protein extract (such as a potato protein enriched extract, mung bean protein enriched extract, rice protein enriched extract, pea protein enriched extract) comprises at least 50%, such as at least 60%, 70%, 80%, or at least 90% such as at least

99% of proteins of peptides and/or polypeptides.

In certain embodiments, the protein extract (such as a protein extract enriched in proteins or a protein extract enriched in peptides) comprises at least 50%, 60%, 70%, or 80%, such as least 90% of proteins, polypeptides and/or peptides that are water soluble and /or soluble in acidic conditions, and optionally have an IEP of more than 4, such as more than 4.5, 5, 5.5, 6, 6.5, or 7, such as more than 7.5;

In certain embodiments, the protein extract (such as a protein extract enriched in proteins or a protein extract enriched in peptides) comprises at least 50%, 60%, 70%, or 80%, such as least 90% of proteins, polypeptides and/or peptides that have an IEP of more than 4, such as mora than 4.5, 5, 5.5, 6, 6.5, or 7, such as more than 7.5.

In certain embodiments, the protein extract (such as a protein extract enriched in proteins) comprises at least 30%, 40%, 50%, 60%, 70%, 80%, or at least 90% such as at least 99% of one type of proteins (such as albumins or albumin like proteins).

In certain embodiments, the protein extract (such as a protein extract enriched in proteins) comprises at least 30%, 40%, 50%, 60%, 70%, 80%, or at least 90% such as at least 99% of a mixture of proteins (such as albumins or albumin like proteins and glutelines).

In certain embodiments, the protein extract comprises at least 30%, 40%, 50%, 60%, 70%, 80%, or at least 90% such as at least 99% of one type of proteins (such as albumins or albumin like proteins), and optionally polypeptide and/or peptides derived thereof (such as albumin derived peptides).

According to certain illustrative embodiments, the at least one protein extract comprises proteins, polypeptides and/or peptides, and may be derived from:

a) tubers including but not limited to potatoes (*Solanum tuberosum*) and any of the 4000 described varieties of potato such as russet potatoes (rough brown skin), red potatoes, white potatoes, yellow potatoes (also called Yukon potatoes) and purple potatoes, sweet potato (*Ipomoea batatas*), manioc or yucca (*Manihot esculenta*), dahlia, carrot (*Daucus carota subsp. sativus*), radish, beetroot, etc;

b) beans including but not limited to black beans, canelli beans, kidney beans, lentil beans, lima beans, pinto beans, soy beans, white beans, mung beans, fava beans and mixtures thereof,

c) nuts including but not limited to almonds, brazil nuts, cashews, peanuts, pecans, hazelnuts, pine nuts, walnuts, pistachios, and mixtures thereof,

d) from plant seeds including but not limited to chia, flax, hemp, pumpkin, sesame, sunflower, quinoa, chickpeas, green peas, peas, oilseed rape/canola and mixtures thereof,

e) from cereal including but not limited to oat, wheat, barley, spelt, corn, rice and mixtures thereof,

f) egg, milk, and any other animal source rich in proteins
and mixtures thereof

According to certain illustrative embodiments, the at least one protein extract (such as a plant or animal protein extract) comprises protein, polypeptides and/or peptides that are water soluble and/or soluble in acidic conditions, and optionally have an IEP of more than 4, such as more than 4.5, 5, 5.5, 6, 6.5, or 7, such as more than 7.5;
and may be derived from:

a) tubers including but not limited to potatoes (*Solanum tuberosum)* and any of the 4000 described varieties of potato such as such as russet potatoes (rough brown skin), red potatoes, white potatoes, yellow potatoes (also called Yukon potatoes) and purple potatoes, sweet potato (*Ipomoea batatas*), manioc or yucca (*Manihot esculenta*), dahlia, carrot (*Daucus carota subsp. sativus*), radish, beetroot, etc;

b) beans including but not limited to black beans, canelli beans, kidney beans, lentil beans, lima beans, pinto beans, soy beans, white beans, mung beans, fava beans and mixtures thereof,

c) nuts including but not limited to almonds, brazil nuts, cashews, peanuts, pecans, hazelnuts, pine nuts, walnuts, pistachios, and mixtures thereof,

d) from plant seeds including but not limited to chia, flax, hemp, pumpkin, sesame, sunflower, quinoa, chickpeas, green peas, peas, oilseed rape/canola and mixtures thereof,

e) from cereals including but not limited to oat, wheat, barley, spelt, corn, rice and mixtures thereof,

f) egg, milk, and any other animal source rich in proteins
and mixtures thereof.

In certain embodiments, the at least one protein extract (such as a plant or animal protein extract, such as a protein extract enriched in proteins) comprises proteins selected from albumins, globulins, glutelines, prolamines, lectin, gliadin, tuberine, patatin and any mixtures thereof, and optionally polypeptides and/or peptides derived therefrom.

As mentioned before, preferably the one or more proteins selected from albumins, globulins, glutelines, prolamines, lectin, gliadin, tuberine, patatin, any other protein from plant, animal or yeast origin and any mixtures thereof, are soluble in water. In certain embodiments, at least 50% of the one or more proteins selected from albumins, globulins, glutelines, prolamines, lectin, gliadin, tuberine, patatin and mixtures thereof are soluble in water, such as at least 60%, 70%, 80%, 90% or such as at least 99% of the albumins, globulins, glutelines, prolamines, lectin, gliadin, tuberine, patatin and mixtures thereof are soluble in water. In a preferred embodiment, at least 80% of the one or more proteins selected from albumins, globulins, glutelines, prolamines, lectin, gliadin, tuberine, patatin and mixtures thereof are water soluble.

In certain embodiments the at least one protein extract (such as a plant or animal protein extract, such as a protein extract enriched in proteins) comprises only water soluble albumins, globulins, glutelines, prolamines, lectin, gliadin, tuberine, patatin, an any other soluble protein from animal, plant or yeast origin as well as any mixture thereof.

In certain embodiments the at least one protein extract (such as a plant or animal protein extract, such as a protein extract enriched in proteins) comprises water soluble proteins such as albumins, globulins, glutelines, prolamines, lectin, gliadin, tuberine, patatin and mixtures thereof and water soluble poplypeptides and/or water soluble water soluble peptides derived therefrom (i.e derived from albumins, globulins, glutelines, prolamines, lectin, gliadin, tuberine and mixtures thereof)

In certain embodiments the at least one protein extract (such as a plant or animal protein extract, such as a peptide enriched extract) comprises water soluble polypeptides and/or peptides derived from, for example, albumins, globulins, glutelines, prolamines, lectin, gliadin, tuberine, patatin and mixtures thereof.

In certain embodiments, the at least one protein extract (such as a plant or animal protein extract) comprises at least 50%, 60%, 70%, 80%, 80% or such as 99% of proteins, polypeptides and/or peptides that are soluble in acidic conditions, such as soluble at a pH of less than 6, less than 5, less than 4, less than 3, or less than 2.

In certain embodiments, the compositions and complex of the invention comprises a potato protein extract (such as a potato extract enriched in proteins or a potato extract enriched in peptides) and optionally comprises a mung bean protein extract (such as a mung bean extract enriched in proteins and/or enriched in peptides).

In certain embodiments, the composition or complex of the invention comprises a potato extract (such as a potato extract enriched in proteins) that comprises at least 20% w/w, at least 30% w/w, 40% w/w, 50% w/w, 60% w/w, 70% w/w, 80% w/w, at least 90% w/w or such as at least 99%w/w of potato albumins, and optionally comprises a mung bean extract (mung bean extract enriched in peptides) that comprises at least 50% w/w, 60% w/w, 70% w/w, 80% w/w, or such as at least 90% w/w of polypeptides and/or peptides.

In certain embodiments, the natural extract comprises at least 20% w/w, at least 30% w/w, 40% w/w, 50% w/w, 60% w/w, 70% w/w, 80% w/w, at least 90% w/w or such as at least 99% w/w of potato albumins, and optionally comprises mung bean derived polypeptides and/or peptides.

Different plant protein extracts and methods for producing the same are described in the literature. Potato protein extracts and methods of extraction of the same are described for example in Peksa A. et al (Food 2009. 79-87 Global science books) are incorporated herein by reference.

Methods for producing plant protein extracts are known in the art. For example, when soluble proteins, proteins, polypeptides and/or peptides are extracted, water or acidic water may be used as solvent.

The plant or part of the plant rich in proteins (such as potatoes, mung beans, rice, peas, etc) may be processed before extraction, for example it can be washed, dried, milled or grounded, etc.

For example, the processes for extraction may comprise the following steps:

(i) extraction of the plant or part of the plant rich in proteins (such as potatoes, mung beans, rice, peas, etc) by a suitable solvent (such as water);

(ii) evaporation of the solvent; and, if required

(iii) purification of the extract (e.g. by chromatography, membrane filtration, etc).

In certain embodiments, the temperature of extraction is in a range of from about 20°C to about 100°C. In a particular embodiment, the temperature for extraction is in a range of from about 50°C to about 70°C. Typically, the ratio

of plant material to solvent mixture used in the extraction process varies from about 1:1 to about 1:10 on a gram to milliliter basis, such as from about 1:3 to about 1:8. The incubation period (i.e. the period during which the plant material is in contact with the solvent) is typically from about 2 hours to about 24 hours.

Mechanical energy can be applied during the extraction process. Applying mechanical energy helps to homogenize the mixture, changes the physical structure of the starting biological material and increases the extraction yields.

In certain embodiments, the protein extract may be subjected to denaturalization and/or hydrolysis (chemical, thermic or enzymatic) to obtain polypeptides and/or peptides extracts. In certain embodiments, the protein raw material may be hydrolyzed by one or more hydrolytic enzymes. In one example, enzyme preparations are used which have a low exo-peptidase activity to minimize the liberation of free amino acids and to improve taste profiles of the protein hydrolysates.

The type of treatment (i.e the enzyme used), the time and the temperature of treatment may influence in the length of the polypeptides and peptides.

Optionally, enzymes after the defined incubation time may be destructed by thermal treatment. Further, the peptides may be separated by centrifugation, or by any other technic known in the art and then purified using for example membrane filtration or any other suitable technique known in the art. Additional steps of sterilization may be also used. Optionally, the peptide preparation may be dried, for example using spray dry.

Animal protein and peptides (polypeptides and/or peptide extracts) may be obtained using methods described previously.

In certain embodiments, the peptides from the peptide enriched extract have a molecular weight of from about 100 to about 10,000 daltons, such as from 100 to about 5,000 daltons, such as from 300 to 2000 daltons, such as from 200 to 500 daltons, such as from 300 to 1000 daltons, such as from 500 to 1000 daltons, such as from 500 to 2000 daltons.

In certain embodiments, the compositions and complexes of the invention, comprises a plant or animal protein enriched extract (such as a potato protein extract, such as a potato protein extract comprising albumins) and, optionally a plant or animal peptide enriched extract (such as a mung bean peptide enriched extract, a rice peptide enriched extract and/or a pea peptide enriched extract).

In certain embodiments, the compositions and complex of the invention comprises a potato protein extract rich in proteins as described previously and optionally comprises a mung bean peptide enriched extract comprising peptides with a molecular weight of from about 100 to about 10,000 daltons, such as from 100 to about 5,000 daltons, such as from 300 to 2000 daltons, such as from 200 to 500 daltons, such as from 300 to 1000 daltons, such as from 500 to 1000 daltons, such as from 500 to 2000 daltons, such as from 500 to 1000 daltons.

In certain embodiments, the compositions and complex of the invention comprises a potato protein enriched extract rich in proteins as described previously and optionally comprises a rice peptide enriched extract comprising peptides with a molecular weight of from about 100 to about 10,000 daltons, such as from 100 to about 5,000 daltons, such as from 300 to 2000 daltons, such as from 200 to 500 daltons, such as from 300 to 1000 daltons, such as from 500 to 1000 daltons, such as from 500 to 2000 daltons, such as from 500 to 1000 daltons.

In certain embodiments, the compositions and complex of the invention comprises a potato protein enriched extract rich in proteins as described previously and optionally comprises pea peptide enriched extract comprising peptides with a molecular weight of from about 100 to about 10,000 daltons, such as from 100 to about 5,000 daltons, such as from 300 to 2000 daltons, such as from 200 to 500 daltons, such as from 300 to 1000 daltons, such as from 500 to 1000 daltons, such as from 500 to 2000 daltons, such as from 500 to 1000 daltons, such as from 800 to 2000 daltons.

In certain embodiments, the compositions and complex of the invention comprises a potato protein enriched extract as described previously and optionally comprises a mung bean peptide enriched extract comprising peptides with a molecular weight of from 300 to about 5,000 daltons, such as from 300 to 2000 daltons, such as from 300 to 1000 daltons, such as from 500 to 2000 daltons, such as from 500 to 1000 daltons and a rice peptide enriched extract comprising peptides with a molecular weight of from 300 to about 5,000 daltons, such as from 300 to 2000 daltons, such as from 300 to 1000 daltons, such as from 500 to 2000 daltons, such as from 500 to 1000 daltons.

In a preferred embodiment the potato protein extract is rich in proteins such as albumins, globulins, glutelines and/or prolamines. In certain embodiments, the potato protein extract comprises at least 50% w/w of albumins, such as at least 60% w/w albumins, such as at least 70% w/w albumins, such as at least 80% w/w albumins, or such as at least 90% w/w albumins, and optionally one or more of globulins, glutelines and/or prolamines, and optionally comprises polyppetides and/or peptides derived therefrom.

In a preferred embodiment the mung bean extract enriched in peptides comprises polypeptides and /or peptides with a molecular weight of from 300 to about 5,000 daltons, such as from 300 to 2000 daltons, such as from 300 to 1000 daltons, such as from 500 to 2000 daltons, such as from 500 to 1000 daltons, and optionally are derived from one or more of the following proteins: albumins, globulins and glutelines. In a preferred embodiment the peptides are mainly originated from albumins (such as at least 60% w/w of the peptides are albumin peptides, such as more than 70% w/w, such as more than 80% w/w, such as more than 90%w/w).

In a preferred embodiment, the rice extract enriched in peptides comprises polypeptides and/or peptides with

a molecular weight of from 300 to about 5,000 daltons, such as from 300 to 2000 daltons, such as from 300 to 1000 daltons, such as from 500 to 2000 daltons, such as from 500 to 1000 daltons, and optionally are derived from one or more of the following proteins: albumins, globulins and glutelines. In a preferred embodiment the peptides are albumin peptides (such as from about 10% w/w to 30% w/w or about 30% w/w to 70% w/w) and / or glutelins peptides (such as from 30% to about 70%w/w).

In a preferred embodiment, the pea extract enriched in peptides comprises polypeptides and /or peptides with a molecular weight of from 100 to about 10,000 daltons, such as from 100 to about 5,000 daltons, such as from 300 to 2000 daltons, such as from 200 to 500 daltons, such as from 300 to 1000 daltons, such as from 500 to 1000 daltons, such as from 500 to 2000 daltons, such as from 500 to 1000 daltons, such as from 800 to 2000 daltons, and optionally are derived from one or more of the following proteins: albumins, globulins and glutelines. In a preferred embodiment the peptides originate from albumins (such as from about 10% w/w to 30% w/w or about 30% w/w to 70% w/w) and / or glutelins (such as from 30% w/w to about 70% w/w).

In certain embodiments of the compositions and complexes of the invention the ratio between the protein enriched extract (such as a potato protein enriched extract) and the peptide enriched extract (such as a mung bean extract enriched in peptides) is from about 100:1 to 1:100, such as 90:10, 80:20; 70:30, 60:40, 50:50, 40:60, 30:70, 20:80, or 10:90. In certain embodiments of the compositions and complexes of the invention, the ratio between the at least one phycobilin (such as a Phycocyanin) to the at least plant protein extract (such as potato protein extract, mung protein extract, rice protein extract and/or pea protein extract) is from about 50:1 to about 1:50, such as from about 40:1 to about 1:40, such as such as from about 30:1 to about 1:30, such as from about 20:1 to about 1:20, such as from about 10:1 to about 1:10, such as 1:1, 1:2, 1:3, 3:1, 2:1, 0.5:1, or about 0.8:2.

In certain embodiments, the composition or the complex of the invention comprises 0.025%spirulina extract with 25% w/w of total phycocyanin , 0.075% potato protein extract with at least 90%w/w of proteins and 0.075% pea extract rich in peptides with at least 80%w/w of peptides, optionally the pea peptides having a molecular weight ranging from 500Da to 3000Da, with a majority between 800 to 2000 Da.

In certain embodiments, the composition or the complex of the invention comprises 0.025% spirulina extract with 25% w/w of total phycocyanin, 0.075% potato protein extract with at least 90%w/w of proteins and 0.075% soy extract rich in peptides with at least 80%w/w of peptides, optionally the soy peptides having a molecular weight ranging from 200Da to 2000Da, with a majority between 300 to 1000 Da.

In certain embodiments, the composition or the complex of the invention, the phycobilin is a phycocyanin, the protein is potato protein and the peptides and/or polypeptides are from mung bean, soy, rice and/or pea and the ratio between them is from about 0.008:1:1 to about of 0.8:1:1.

In certain embodiments, the composition or the complex of the invention comprises spirulina extract comprising at least 25% w/w of phycocyanin , potato protein extract with at least 90%w/w of proteins and pea extract rich in peptides with at least 80%w/w of peptides, optionally the pea peptides having a molecular weight ranging from 500Da to 3000Da, with a majority between 800 to 2000 Da and wherein the ration between the potato extract and the pea extract is from is from about 10:1 to about 1:10, such as from about 5:1 to about 1:5, such as 1:1, 1:2, 1:3, 3:1, 2:1, 0.5:1, or about 0.8:2, and wherein the ratio between the phycocyanin: proteins and peptides is from about 20:1 to about 1:20, such as from about 10:1 to about 1:10, such as 1:9, 1:8, 1:7, 1:6, 1:5, 1:4, or about 1:2.

In certain embodiments, the composition or the complex of the invention comprises 0.025% spirulina extract with 25% w/w of total phycocyanin, 0.075% potato protein extract with at least 90%w/w of proteins and 0.075% soy extract rich in peptides with at least 80%w/w of peptides, optionally the soy peptides having a molecular weight ranging from 200Da to 2000Da, with a majority between 300 to 1000 Da, and wherein the ration between the potato extract and the pea extract is from is from about 10:1 to about 1:10, such as from about 5:1 to about 1:5, such as 1:1, 1:2, 1:3, 3:1, 2:1, 0.5:1, or about 0.8:2, and wherein the ratio between the phycocyanin:proteins and peptides is from about 20:1 to about 1:20, such as from about 10:1 to about 1:10, such as 1:9, 1:8, 1:7, 1:6, 1:5, 1:4, or about 1:2.

As demonstrated in the examples of the present application, the combination of phycocyanins and soluble peptides, polypeptides and proteins results in a stabilization of said phycocynanins. Thus, in certain embodiments, the colour provided by said compositions or complexes of the invention is stable to heat, acidic conditions and /or light exposure.

In certain embodiments of the composition or complex of the invention, the phycobilin (such as phycocyanin) present in said compositions or complexes, and that is complexed with the at least one soluble peptides, polypeptides and/or proteins has a blue colour that is stable to heat, acidic conditions and /or light exposure.

Solubilized phycocyanins (for example solubilized in water or any other liquid like a syrup) are known to aggregate, precipitate and lose the colour when exposed to acidic conditions like pH of less than 5, such as less than pH 4.5. In the present invention, the term "stable to acidic conditions" means that the colour hue of the at least one phycobilins (such as phycocyanin) present in the compositions or complexes of the present invention is not changed or has a change of less than 30%, such as less than 20%, such as less than 10%, or such as less than 5% of colour hue change in respect to the colour hue measured before the acidic treatment. "Acidic treatment or condition" means in the present

application a pH of less than 5, such as less than pH 4.5, such as less than pH 4, such as less than pH 3, or such as less than pH 2.

Thus, in certain embodiments, the colour provided by said compositions or complexes of the invention is stable is stable at a pH of less than about 5, such as at a pH of less than about 4.5, such as a pH less than about 4, such as a pH less than about 3, or such as a pH less than about pH 2.

Thus, in certain embodiments of the composition or complex of the invention, the phycobilin (such as phycocyanin) is stable at a pH of less than about 6, such as at a pH of less than about of 5, such as at a pH of less than about 5, such as a pH less than about 4, such as a pH less than about 3, or such as a pH less than about 2.

In a preferred embodiment, the phycobilin (such as phycocyanin) present in the composition or complex of the invention is stable from pH 2.5 to pH 4.5.

In the present invention, the term "stable to heat" means that the colour hue provided by the at least one phycobilins (such as phycocyanin) is not changed or has a change of less than 30% in respect to the colour hue measured before the heat treatment, such as less than 20%, such as less than 10%, or such as less than 5% of colour hue change.

Thus, in certain embodiments, the colour provided by said compositions or complexes of the invention is stable after a thermal treatment of more than 40°C, such as a treatment of more than 50°C, 60°C, 70°C, 80°C, or such as more than 90°C for a period at least 30 seconds, at least 1 minute, at least 5 minutes, at least 10 minutes, at least 30 minutes, at least 1 hours, at least 2 hours, or such as at least 5 hours.

Thus, in certain embodiments of the composition or complex of the invention, the phycobilin (such as phycocyanin) is stable after a thermal treatment of more than 40°C, such as a treatment of more than 50°C, 60°C, 70°C, 80°C, or such as more than 90°C for a period at least 30 seconds, at least 1 minute, at least 5 minutes, at least 10 minutes, at least 30 minutes, at least 1 hours, at least 2 hours, or such as at least 5 hours.

In certain embodiments, the colour provided by said compositions or complexes of the invention is stable to light exposure.

In certain embodiments of the composition or complex of the invention, the colour provided by the phycobilin (such as phycocyanin) is stable to light exposure.

In the present invention, the term "stable to light" or "stable to light exposure" means that the colour hue provided by the at least one phycobilins (such as phycocyanin) is not changed or has a change of less than 30% in respect to the colour hue measured at dark conditions.

Thus, in certain embodiments of the composition or complex of the invention, the colour provided by the phycobilin (such as phycocyanin) is stable after a light exposure of more than 5 minutes, such as more than 30 minutes, such as more than 1 hour, such as more than 2 hours, 3, hours, 4 hours, 5 hours, 10 hours, 12 hours, 24 hours, 2 days, 10 days, such as more than 30 days, or such as more than 60 days.

In one embodiment, the colouring compositions of the invention (such as a food colouring composition) is in a liquid form. Optionally, the colouring composition further comprises water. Optionally, water may be present in the colouring composition in an amount of up to about 20% w/w. Optionally, the amount of water in the colouring composition is about 3.5%, 4.0%, 4.5% or 5.0% w/w. After the complex of the at least one the phycobilin (such as phycocyanin) and the at least one protein, polypeptide and/or peptide (or protein extracts as described before) is formed, the composition of the invention or the complex of the invention may be dried by any method know in the art.

Thus, in one embodiment, the colouring composition (such as a food colouring composition) or the complex of the invention is in a powder form. Optionally, the food colouring composition further comprises a carrier. Optionally, the carrier may be selected from the group consisting of maltodextrin, Arabic gum, inulin, alginate, starches, modified starch and combination thereof. Optionally, the carrier may be maltodextrin. Optionally, the carrier may be present in the colouring composition in an amount of up to about 4.0% w/w. Optionally, the amount of carrier in the composition is between about 1.0% to about 3.5% w/w. Optionally, the amount of carrier in the food composition is about 1.2%, 2.0%, 2.1% or 3.1% w/w. The present invention is also related to a process for formation of the complex according to the invention, comprising the step of mixing at least one peptide, polypeptide and/or protein as defined herein, or a protein extract comprising at least one peptide, polypeptide and/or protein as defined herein with a composition comprising at least one phycobilin in an aqueous solution.

In certain embodiments of the process for formation of the complex of the invention, additionally comprises a step of filtration after mixing the composition comprising at least one phycobilin in an aqueous solution and the at least one peptide, polypeptide and/or protein to remove non soluble fractions.

The present invention is also related to a method (or method of the invention) for stabilizing a phycobilin comprising the steps of:

i) contacting a phycobilin with at least one protein, polypeptide and/or peptide as defied before or a protein extract comprising at least one protein, polypeptide and/or peptide asdefined before in a water solution

ii) optionally adding sugars

In certain embodiments the method of the invention additionally comprises a step of filtration the mix obtained in step i) and/or ii) to remove the non-soluble fractions.

In certain embodiments the method of the invention, additionally comprises a step of concentrating the result of step i) or ii).

In certain embodiments the method of the invention, additionally comprises a step of drying, such as spray drying.

All embodiments regarding the phycobilins, the at least one protein, polypeptide and/or peptide or the protein extracts described previously for the compositions or complexes of the invention also apply for the method of the invention.

In certain embodiments of the method of the invention, the protein extract is a plant protein extract and/or an animal protein extract.

In certain embodiments of the method of the invention, the protein extract is an extract enriched in proteins.

In certain embodiments of the method of the invention, the protein extract is enriched in peptides.

In certain embodiments of the method of the invention, the peptides have a molecular weight of from about 100 to about 10,000 daltons, such as from 100 to about 5,000 daltons, such as from 300 to 2000 daltons, such as from 200 to 500 daltons, such as from 300 to 1000 daltons, such as from 500 to 1000 daltons, such as from 500 to 2000 daltons, such as from 500 to 1000 daltons, or such as from 800 to 2000 daltons.

In certain embodiments of the method of the invention, the at least one protein, polypeptide and/or peptide or the protein extract is obtained from

a) tubers such as potatoes (*Solanum tuberosum*) and any of the 4000 described varieties of potato such as such as russet potatoes (rough brown skin), red potatoes, white potatoes, yellow potatoes (also called Yukon potatoes) and purple potatoes, sweet potato *(Ipomoea batatas),* manioc or yucca (*Manihot esculenta*), dahlia, carrot (*Daucus carota subsp. sativus*), radish, beetroot, etc;

b) beans such as beans selected from black beans, canelli beans, kidney beans, lentil beans, lima beans, pinto beans, soy beans, white beans, mung beans, fava beans and mixtures thereof,

c) nuts such as nuts selected from almonds, brazil nuts, cashews, peanuts, pecans, hazelnuts, pine nuts, walnuts, pistachios, and mixtures thereof,

d) from plant seeds such as seeds selected from chia, flax, hemp, pumpkin, sesame, sunflower, quinoa, chickpeas, green peas, peas, oilseed rape/canola and mixtures thereof,

e) from cereals such as cereals selected from oat, wheat, barley, spelt, corn, rice and mixtures thereof, and/or

f) egg, milk, and any other animal source rich in proteins.

In certain embodiments of the method of the invention, the phycobilin is selected from phycoerythrobilin, phycocyanobilin, phycoviolobilin, phycourobilin and mixtures thereof.

In another aspect, the invention is related to a stabilized phycobilin obtained using the method of the invention or "stable phycobilin of the invention"

In certain embodiments, the stable phycobilin (such as a Phycocyanin) is a spirulina (*Arthrospira platensis*) derived phycocyanin.

In certain embodiments, the stable phycobilin (such as a Phycocyanin) of the invention is stable in acidic conditions, stable to heat, stable to light and /or stable to light exposure. The terms stable to heat, stable to light and stable to light exposure were described previously.

In certain embodiments, the stabilized phycobilin (such as a Phycocyanin) of the invention has a colour with a maximum absorption band at 618nm +- 5nm.

In certain embodiments, the stabilized phycobilin (such as a Phycocyanin) of the invention has a colour with a maximum absorption band at 565nm +/- 5nm.

In certain embodiments, the stabilized phycobilin (such as a Phycocyanin) of the invention has a colour with a maximum absorption band at 495nm +/- 5nm.

In certain embodiments, the stabilized phycobilin (such as a Phycocyanin) of the invention has a colour with a maximum absorption band at 550nm+/- 5nm.

<u>Colour evaluation</u>

The colouring compositions and the food products of the present disclosure can be analyzed with a spectrophotometer, and CIELAB L*a*b* values can be calculated from the spectral data, as described in greater detail below.

The L*a*b* values provide a means of representing colour characteristics and assessing the magnitude of difference between two colours. The L*a*b* values also provide a means of representing colour characteristics and assessing the magnitude of difference between two colours not only of solutions, but also of products. Measurements of colour compositions and products in solid form are accomplished using reflectance measurements from the surface of the product.

For example, L*a*b* values consist of a set of coordinate values defined in a three-dimensional Cartesian coordinate system. L* is the lightness coordinate and provides a scale of lightness from black (0 L* units) to white (100 L* units) on a vertical axis. a* and b* are coordinates related to both hue and chroma, a* provides a scale for greenness (- a* units) to redness (+ a* units), with neutral at the center point (0 a* units), on a horizontal axis; b* provides a scale for blueness (- b* units) to yellowness (+ b* units), with neutral at the center point (0 b* units), on a second horizontal axis perpendicular to the first horizontal axis. The three axes cross where L* has a value of 50 and a* and b* are both zero.

ΔE is a measure of the magnitude of total colour difference between two colours represented in CIELAB L*a*b* colour space. It has been reported that an experienced colour observer cannot distinguish any difference between two colours when the ΔE is about 2.3 or less. The ΔE of two different colours with L*a*b* values, $L^*_1a^*_1b^*_1$ and $L^*_2a^*_2b^*_2$, is calculated using Equation 1:

$$\Delta E_{ab}^{*} = \sqrt{(L^{*}_{1} - L^{*}_{2})^2 + (a^{*}_{1} - a^{*}_{2})^2 + (b^{*}_{1} - b^{*}_{2})^2} \qquad \text{Equation 1}$$

In another aspect, the invention is related to a colouring composition (such as a food colouring composition) comprising a stabilized phycobilin (such as a Phycocyanin) according to the present invention, a colouring composition according to the present invention and/or a complex according to the present invention.

In one embodiment, the phycobilin (such as an spirulina derived colour, such a spirulina extract) is present in the colouring compositions, complexes and colouring compositions of the invention in an amount in the range of about 0.5% to about 25.0% w/w. Optionally, the phycobilin containing colorant (such as an spirulina derived colour, such a spirulina extract) is present in an amount of about 0.5%, 1.0%, 1.5%, 2.0%, 2.5%, 3.0%, 3.5%, 4.0%, 4.5%, 5.0%, 5.5%, 6.0%, 7.0%, 7.5%, 8.0%, 8.5%, 9.0%, 9.5%, 10.0%, 10.5%, 11.0%, 11.5%, 12.0%, 12.5%, 13.0%, 13.5%, 14.0%, 14.5%, 15.0%, 15.5%, 16.0%, 16.5%, 17.0%, 17.5%, 18.0%, 18.5%, 19.0%, 19.5%, 20.0%, 20.5% or 21.0% w/w. Optionally, the phycobilin containing colorant (such as an spirulina derived colour, such a spirulina extract) is present in an amount of about 1.5%, 3.0%, 10%, 19.0% or 20.0% w/w. Optionally, the phycobilin containing colorant (such as an spirulina derived colour, such a spirulina extract) is present in an amount of about 1.7%, 2.7%, 10.2%, 18.7% or 20.0 % w/w.

Mix with other dyes

The stabilized phycobilin (such as a Phycocyanin) present in the composition, complexes and colouring compositions of the invention may be combined with other pigments to generate a broad range of colours. For example, mixing a composition of the invention having a stable blue colour with a pigment that has a yellow colour would results in a stable green colour.

Thus, the composition, complexes and colouring compositions of the invention may additionally comprise other pigments.

The addition of the further pigment may be done before the complex between the phycobilin (such as a Phycocyanin) with the at least one protein, polypeptide and/or peptide occurs (complex of the invention) or after said complex in in place.

Thus, in certain embodiments, the stabilized phycobilin (such as a Phycocyanin) may be mixed with other pigments.

Thus, in certain embodiments, the colour composition of the invention may be mixed with other pigments.

The pigments used may be of synthetic or of natural origin. In a preferred embodiment, the pigment is a natural pigment such as a colouring foodstuff or a natural colour.

Pigments

The major classes of plant pigments are chlorophylls that give plants their green colour; carotenoids, which are red, orange or yellow; anthocyanins, which appear red, purple, blue or black, according to the pH; and betalains, which are red or yellow.

Therefore, pigments suitable to be used in the present invention are selected from the group consisting of anthocyanins, carotenoids, chlorophylls, betalains, anthraquinone, naphthoquinone and azaphilone.

The pigments used in the invention may be obtainable from a synthetic source or they may be obtainable from a natural source, such as from a plant, an algae or a fungi. Advantageously, a pigment which is obtained from a natural

source would satisfy the clean label requirement of the food products.

Anthocyanins

Anthocyanins are glycosides of the sugar-free anthocyanidins (the aglycone). The sugar molecules in anthocyanins are bound via O-glycosidic bonds to one or more of the hydroxy groups typically present in an anthocyanidin molecule. Most naturally occurring anthocyanins are 3-O-glycosides.

The most common types of anthocyanidins present in plants are cyanidin, delphinidin, pelargonidin, peonidin, petunidin and malvidin, in which hydroxy groups in the 3, 5, 7 and at least one of the 3', 4' or 5' positions are sugar-substituted. Examples of natural anthocyanins that may be used in the invention include, but are not limited to pelargonidin, cyanidin and peonidin-based anthocyanins.

Examples of sugar molecules found in anthocyanin structures include arabinose, galactose, glucose, rhamnose, rutinose, sambubiose, sophorose and xylose. An anthocyanin can be substituted with hydrogen, hydroxyl, and/or methoxyl groups at various positions. Anthocyanins can also be acylated, where they can have one or more molecules esterified to the sugar molecules at the 2-, 3-, 4- and/or 6-position of a monosaccharide.

Many anthocyanins are acylated (generally at the C6-OH group of a glucose moiety), with either aliphatic acids (e.g., acetic, malic, malonic, oxalic, or succinic acid) or phenolic acids (e.g., p-hydroxybenzoic, caffeic, p-coumaric, ferulic, or sinapic acid). Thus, the anthocyanins may be in the form of an acylated glycoside anthocyanin. For example, pelargonidin-based acylated anthocyanins, cyanidin-based acylated anthocyanins and peonidin-based acylated anthocyanins or structural analogues of pelargonidin-based acylated anthocyanins, cyanidin-based acylated anthocyanins and peonidin-based acylated anthocyanins.

Red radishes (Raphanus sativus L.) and red-fleshed potatoes (Solanum tuberosum L.) provide colour characteristics similar to FD&C Red #40. In one embodiment, the anthocyanin is a red radish derived colour.

The major pigments of red radish and red-fleshed potatoes have been identified as pelargonidin-3-sophoroside-5-glucoside acylated with malonic acid and either p-coumaric and/or ferulic acids and pelargonidin-3-rutinoside-5-glucoside acylated with p-coumaric acid, respectively (Rodriguez-Saona , L.E. et al., J. Food Sci. 1999, 64, 451-456, the disclosure of which is herein incorporated by reference). Therefore, the anthocyanins used in the present invention may be pelargonidin-3-sophoroside-5-glucoside acylated with malonic acid and either p-coumaric and/or ferulic acids, and/or pelargonidin-3-rutinoside-5-glucoside acylated with p-coumaric acid.

In one embodiment, the anthocyanin is a black carrot derived colour.

Recently, cyanidin 3-xylosyl(glucosyl)galactosides acylated with sinapic acid, ferulic acid, and coumaric acid were identified as the major anthocyanins in black carrot (Cuevas Montilla, E., et al, J. Agric. Food Chem. 2011, 59, 3385-3390, the disclosure of which is herein incorporated by reference). Therefore, the anthocyanins used in the present invention may be cyanidin 3-xylosyl(glucosyl)galactosides acylated with sinapic acid, ferulic acid, and coumaric acid.

In one embodiment, the anthocyanin may be present as an extract obtained or obtainable from a plant from the Brassicaceae, the Rosaceae, the Solanaceae, the Convolvulaceae, the Apiaceae family or mixtures thereof. The term mixture refers to a mixture obtained or obtainable either when the plant from the Brassicaceae, the plant from the Rosaceae, the plant from the Solanaceae and/or the plant from the Apiaceae family are extracted together using a single solvent or when the plant from the Brassicaceae, the plant from the Rosaceae, the plant from the Solanaceae and the plant from the Apiaceae family are extracted independently and the resulting extracts combined.

The plant of the Brassicaceae family may be Raphanus sativus L. (red radish). The plant of the Rosaceae family may be the Fragaria (strawberry). The plant of the Solanaceae family may be the Solanum tuberosum (red potato). The plant of the Convolvulaceae family may be Ipomoea batatas (purple sweet potato root). The plant of the Apiaceae family may be Daucus carota ssp. sativus var. atrorubens Alef. (black carrot).

In one embodiment, the betalain may be present as an extract obtained or obtainable from a plant from the Amaranthaceae family. Optionally, the plant from the Amaranthaceae family may be Beta vulgaris (beet).

In one embodiment, the anthocyanin (0.1% in pH 3.0) such as a red radish derived colour (0.1% in water) has a L* value of 58.89 +/-5%, a* value of 69.81+/-5% and b* value of 51.43 +/- 5%.

In one embodiment, the anthocyanin (0.1% in pH 3.0) such as a black carrot derived colour has a L* value of 38.24 +/-5%, a* value of 62.95+/-5% and b* value of 25.24 +/- 5%.

*Betalains*

Betalains are a class of red and yellow tyrosine-derived pigments found in plants of the order *Caryophyllales*, where they replace anthocyanin pigments. There are two categories of betalains:

a) Betacyanins, which appear reddish to violet. Examples of betacyanins present in plants include betanin, isobetanin, probetanin, and neobetanin; and

b) Betaxanthins, which appear yellow to orange. Betaxanthins present in plants include vulgaxanthin, miraxanthin, portulaxanthin, and indicaxanthin.

Therefore, the betalains used in the present invention may be betacyanins, such as betanin, isobetanin, probetanin, and neobetanin; and/or betaxanthins, such as vulgaxanthin, miraxanthin, portulaxanthin, and indicaxanthin.

Betalains are glycosides of a betanidin aglycone, whose core structure is betalamic acid (i.e. 4-(2-oxoethylidene)-1,2,3,4-tetrahydropyridine-2,6-dicarboxylic acid).

Betanin is usually obtained from the extract of the juice of *Beta vulgaris* (red beets, beetroot).

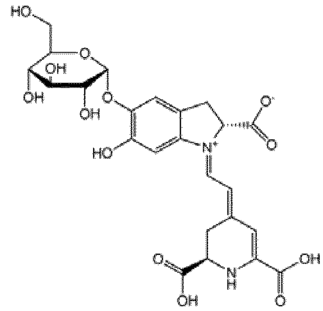

Betanin basic structure

In one embodiment, the betalain is a beetroot derived colour. Optionally, the betalain used in the present invention may be betanin.

In one embodiment, the betalain (0.1% in water) (such as a beetroot derived colour) has a L* value of 85.29 +/-5%, a* value of 26.66 +/-5% and b* value of -5.76 +/- 5%.

In one embodiment, the betalain containing colorant (such as a beetroot derived colour, such as a beetroot powder) is present in the food colouring composition in an amount in the range of about 25% to about 60% w/w. Optionally, the betalain containing colorant (such as a beetroot derived colour, such as a beetroot powder) is present in an amount in the range of about 30% to about 50% w/w. Optionally, the betalain containing colorant (such as a beetroot derived colour, such as a beetroot powder) is present in an amount of about 30.0%, 31.0%, 32.0%, 33.0%, 34.0%, 35.0%, 36.0%, 37.0%, 38.0%, 39.0%, 40.0%, 41.0%, 42.0%, 43.0%, 44.0%, 45.0%, 46.0%, 47.0%, 48.0%, 49.0% or 50.0 w/w. Optionally, the betalain containing colorant (such as a beetroot derived colour, such as a beetroot powder) is present in an amount of about 32.5%, 38.8%, 42.0% or 45.4% w/w.

In one embodiment, the anthocyanin containing colorant (such as a black carrot derived colour, such as black carrot concentrate) is present in the composition, complexes and colour compositions of the invention in an amount in the range of about 3.0% to about 8.5% w/w. Optionally, the anthocyanin containing colorant (such as a black carrot derived colour, such as black carrot concentrate) is present in an amount of about 3.0%, 3.5%, 4.0%, 4.5%, 5.0%, 5.5%, 6.0%, 6.5%, 7.0%, 7.5%, 8.0% or 8.5% w/w. Optionally, the anthocyanin containing colorant (such as a black carrot derived colour, such as black carrot concentrate) is present in an amount of about 3.5%, 4.0%, 4.5%, 6.0%, 7.0% or 8.0% w/w. Optionally, the anthocyanin containing colorant (such as a black carrot derived colour, such as black carrot concentrate) is present in an amount of about 3.3%, 3.8%, 4.3%, 4.4%, 5.7%, 7.0%, 7.9% or 8.1% w/w.

In one embodiment, the anthocyanin containing colorant (such as a red radish derived colour, such as red radish powder) is present in the food colouring composition in an amount in the range of about 0.1% to about 1.5% w/w. Optionally, the anthocyanin containing colorant (such as a red radish derived colour, such as red radish powder) is present in an amount of about0.1%, 0.2%, 0.3%, 0.4%, 0.5%, 0.6%, 0.7%, 0.8%, 0.9%, 1.0%, 1.1%, 1.2%, 1.3%, 1.4% or 1.5% w/w. Optionally, the anthocyanin containing colorant (such as a red radish derived colour, such as red radish powder) is present in an amount of about 0.5%, 0.6%, 0.9% or 1.3% w/w.

Yellow colorants

Yellow colorant that can be used in the present invention include without limitation natural colorants such as carotenoids, safflower, yellow gardenia, riboflavin and also artificial colorants.

Carotenoids are a class of naturally occurring pigments synthetized from plants, photosynthetic bacteria and algae, they can be classified according to their chemical structure to: Beta-carotenes: hydrocarbons that do not contain oxygen and Xanthophyll (contain oxygen) such as curcumins and luteins.

Colouring properties of these pigments is provided by conjugated double-bond system, which constitutes the light absorbing chromophores. Light absorption leads to higher energy excited state of the molecules. In case of carotenoids, the electronic transition occurring is $\pi$ to $\pi^*$ which does not require high energy levels to occur. The low energy required correlates to light in the visible region 400 - 500 nm. Thus yellow, orange and red colours are observed.

In one embodiment, the carotenoids can be derived from fruits and vegetables such as carrots (such as carrot juice), bacteria such as *Blakeslea Tripora* and from micro-algae such a *Duneliella Salina.*

In one embodiment, the carotenoids containing colorant (such as a carrot juice powder) is present in the food colouring composition in an amount in the range of about 25% to about 60% w/w. Optionally, the carotenoids containing colorant (such as a carrot juice powder) is present in an amount in the range of about 30% to about 50% w/w. Optionally, the carotenoids containing colorant (such as a carrot juice powder) is present in an amount of about 30.0%, 31.0%, 32.0%, 33.0%, 34.0%, 35.0%, 36.0%, 37.0%, 38.0%, 39.0%, 40.0%, 41.0%, 42.0%, 43.0%, 44.0%, 45.0%, 46.0%, 47.0%, 48.0%, 49.0% or 50.0 w/w.

In certain embodiments, the stabilized phycobilin of the invention (such as a Phycocyanin), compositions, complexes, and colour compositions of the invention may be mixed with Safflower, carrot juice, carotenoids and other yellow colours to generate stable green colours.

The present invention also relates to a kit comprising the different elements of compositions, complexes, and colour compositions of the invention, and optionally instructions on how to mix, prepare and/or use said ingredients. In certain embodiments, the kit comprises the elements already mixed and ready to use (for example as a blend) and optionally instructions of how to use said ingredients. In certain embodiments, the kit comprises other colours such as yellow or red colours.

## Uses and products

The present invention is also related to a consumable, a cosmetic or a pharmaceutical or nutraceutical preparation comprising a stabilized phycobilin of the invention (such as a Phycocyanin), compositions, complexes, and colour compositions of the invention.

In one aspect, use of a stabilized phycobilin of the invention (such as a Phycocyanin), a compositions, complexes, and colouring compositions of the invention (food colouring composition) as described before in colouring a food product is provided. The stabilized phycobilin of the invention (such as a Phycocyanin), a compositions, complexes, and food colouring compositions of the present invention can be added to a food product in an amount effective to increase, enhance and/or modify the colour characteristics of a food product or portion thereof.

Food encompasses the following general food categories, as defined by the Food and Drug Administration (FDA): baked goods and baking mixes, including all ready-to-eat and ready-to-bake products, flours, and mixes requiring preparation before serving; beverages, alcoholic, including malt beverages, wines, distilled liquors, and cocktail mix; beverages and beverage bases, non-alcoholic, including only special or spiced teas, soft drinks, coffee substitutes, and fruit and vegetable flavored gelatin drinks; breakfast cereals, including ready-to-eat and instant and regular hot cereals; cheeses, including curd and whey cheeses, cream, natural, grating, processed, spread, dip, and miscellaneous cheeses; chewing gum, including all forms; coffee and tea, including regular, decaffeinated, and instant types; condiments and relishes, including plain seasoning sauces and spreads, olives, pickles, and relishes, but not spices or herbs; confections and frostings, including candy and flavored frosting, marshmallows, baking chocolate, and brown, lump, rock, maple, powdered, and raw sugars; dairy product analogs, including nondairy milk, frozen or liquid creamers, coffee whiteners, toppings, and other nondairy products; egg products, including liquid, frozen, or dried eggs, and egg dishes made therefrom, i.e., egg roll, egg foo young, egg salad, and frozen multicourse egg meals, but not fresh eggs; fats and oils, including margarine, dressings for salads, butter, salad oils, shortenings and cooking oils; fish products, including all prepared main dishes, salads, appetizers, frozen multicourse meals, and spreads containing fish, shellfish, and other aquatic animals, but not fresh fish; fresh eggs, including cooked eggs and egg dishes made only from fresh shell eggs; fresh fish, including only fresh and frozen fish, shellfish, and other aquatic animals; fresh fruits and fruit juices, including only raw fruits, citrus, melons, and berries, and home-prepared "ades" and punches made therefrom; fresh meats, including only fresh or home-frozen beef or veal, pork, lamb or mutton and home-prepared fresh meat-containing dishes, salads, appetizers, or sandwich spreads made therefrom; fresh poultry, including only fresh or home-frozen poultry and game birds and home-prepared fresh poultry-containing dishes, salads, appetizers, or sandwich spreads made therefrom; fresh vegetables, tomatoes, and potatoes, including only fresh and home-prepared vegetables; frozen dairy desserts and mixes, including ice cream, ice milks, sherbets, and other frozen dairy desserts and specialties; fruit and water ices, including all frozen fruit and water ices; gelatins, puddings, and fillings, including flavored gelatin desserts, puddings, custards, parfaits, pie fillings, and gelatin base salads; grain products and pastas, including macaroni and noodle products, rice dishes, and frozen multicourse meals, without meat or vegetables; gravies and sauces, including all meat sauces and gravies, and tomato, milk, buttery, and specialty sauces; hard candy and cough drops, including all hard type candies; herbs, seeds, spices, seasonings, blends, extracts, and flavorings, including all natural and artificial spices, blends, and flavors; jams and jellies, home-prepared, including only home-prepared jams, jellies, fruit butters, preserves, and sweet spreads; jams and jellies, commercial, including only commercially processed jams, jellies, fruit butters, preserves, and

sweet spreads; meat products, including all meats and meat containing dishes, salads, appetizers, frozen multicourse meat meals, and sandwich ingredients prepared by commercial processing or using commercially processed meats with home preparation; milk, whole and skim, including only whole, lowfat, and skim fluid milks; milk products, including flavored milks and milk drinks, dry milks, toppings, snack dips, spreads, weight control milk beverages, and other milk origin products; nuts and nut products, including whole or shelled tree nuts, peanuts, coconut, and nut and peanut spreads; plant protein products, including the National Academy of Sciences/National Research Council "reconstituted vegetable protein" category, and meat, poultry, and fish substitutes, analogs, and extender products made from plant proteins; poultry products, including all poultry and poultry-containing dishes, salads, appetizers, frozen multicourse poultry meals, and sandwich ingredients prepared by commercial processing or using commercially processed poultry with home preparation; processed fruits and fruit juices, including all commercially processed fruits, citrus, berries, and mixtures; salads, juices and juice punches, concentrates, dilution, "ades", and drink substitutes made therefrom; processed vegetables and vegetable juices, including all commercially processed vegetables, vegetable dishes, frozen muiticourse vegetable meals, and vegetable juices and blends; snack foods, including chips, pretzels, and other novelty snacks; soft candy, including candy bars, chocolates, fudge, mints, and other chewy or nougat candies; soups, home-prepared, including meat, fish, poultry, vegetable, and combination home-prepared soups; soups and soup mixes, including commercially prepared meat, fish, poultry, vegetable, and combination soups and soup mixes; sugar, white, granulated, including only white granulated sugar; sugar substitutes, including granulated, liquid, and tablet sugar substitutes; and sweet sauces, toppings, and syrups, including chocolate, berry, fruit, corn syrup, and maple sweet sauces and toppings.

For example, the food colouring composition as described hereinbefore can be used to impart a blue colour similar to the colour obtained when using Brilliant Blue FCF (artificial colour) to food products, such as dairy, confectionery, beverages, sauces/gravies, etc.

A dairy product may refer to yogurt, custard, milk smoothie, milk shake, dairy ice cream.

A confectionery product may refer to a sweet or candy food product, such as chewing gums or hard and soft confectionery products. Non-limiting examples of confectionery products include cakes, cookies, pies, chocolates, chewing gums, gelatins, ice creams, puddings, jams, jellies, gummies, hard boiled candies, chewy candies, cereal and other breakfast foods, canned fruits and fruit sauces.

A beverage product may refer to beverages, beverage mixes and concentrates, including but not limited to alcoholic and non-alcoholic ready to drink and dry powdered beverages. Non-limiting examples of beverages can include carbonated and non-carbonated beverages, e.g., sodas, fruit or vegetable juices.

A sauce product may refer to a sweet or savoury semi-solid composition used to add flavour, moisture and/or visual appeal to a dish. Non-limiting examples of sauces include gravy and barbecue sauce.

A meat analogue product may refer to foods made from vegetarian ingredients, which approximate certain aesthetic qualities (such as texture, flavour, appearance) or chemical characteristics of specific types of meat. Non-limiting examples of meat analogues include vegetable (veggie) burgers.

In yet another aspect, it is provided a food product comprising a food colouring composition as described hereinbefore. For example, the food product may be as described above.

One of ordinary skill in this art will recognize that the optimal amount of food colouring composition present in a given food product is determined by factors such as overall desired colour, solubility, regulatory approval, etc. One of ordinary skill in this art can readily determine the optimal amount of colour for a given product based on those factors.

In one aspect, use of a stabilized phycobilin of the invention (such as a stabilized Phycocyanin), compositions, complexes, and colouring compositions of the invention (colouring compositions) as described before in colouring a pharmaceutical, cosmeceutical, nutraceutical or cosmetic product is provided. The stabilized phycobilin of the invention (such as a Phycocyanin), the compositions, complexes, and colouring compositions of the present invention can be added to the product (pharmaceutical, nutraceutical or cosmetic product) in an amount effective to increase, enhance and/or modify the colour characteristics of the product or a portion thereof.

In another aspect, the invention relates to a pharmaceutical composition, cosmeceutical, a nutraceutical or to a cosmetic composition comprising a stabilized phycobilin of the invention (such as a stabilized Phycocyanin), compositions, complexes, and colouring compositions of the invention as defined in the present document and, optionally a vehicle adequate for the formulation of said a stabilized phycobilin of the invention (such as a stabilized Phycocyanin), compositions, complexes, and colour compositions of the invention into said pharmaceutical composition, cosmeceutical or cosmetic composition. The stabilized phycobilin of the invention (such as a stabilized Phycocyanin), compositions, complexes, and colouring compositions of the present invention would provide a desired colour (such as a stable green or blue colour) to said pharmaceutical, cosmeceutical, cosmetic or nutraceutical formulation.

"Pharmaceutical composition", as used herein, relates to compositions and molecular entities that are physiologically tolerable. Preferably, the term "pharmaceutically acceptable" means it is approved by a regulatory agency of a state or federal government or is included in the U.S. Pharmacopoeia or other generally recognized pharmacopoeia for use in animals, and more particularly in humans.

"Cosmetic composition", as used herein refers to a composition suitable for use in personal hygiene of human beings or animals, or in order to enhance the natural beauty or change the body appearance without affecting the structure or functions of the human or animal body, comprising one or more products providing such effects. If desired, the cosmetic composition provided by the invention can contain, in addition to the composition of the invention, one or more cosmetics or cosmetic products, i.e., substances or mixtures intended to be placed in contact with the external parts of the human or animal body (e.g., epidermis, hair system, nails, lips, etc.) or with the teeth and the buccal mucosa, for the exclusive or main purpose of cleaning them, perfuming them, changing their appearance, protecting them, keeping them in good condition or correcting body odors. Illustrative examples of cosmetically acceptable vehicles include the products contained in the INCI (International Nomenclature of Cosmetic Ingredients) list. The composition of the present invention may be added to a wide variety of products for cosmetic application, including makeup, creams for cleansing, protecting, treating, or caring for the skin, in particular, the face, hands, and feet (e.g., day and night creams, makeup removal creams, foundation creams and sunscreens), liquid foundations, makeup removal lotions, protective or skin-care body lotions, sunscreen lotions, skin care lotions, gels, or foams, such as cleansing, sunscreen, and artificial tanning lotions, bath preparations, deodorant compositions, after-shave gels or lotions, depilatory creams, and compositions used for insect stings and against pain. The composition of the invention may take any of a wide variety of forms, and include, for example dressings, lotions, solutions, sprays, creams, gels, ointments, or the like.

As used herein, the term "cosmeceutical product" refers to a product suitable for use in the body or animal body comprising one or more cosmeceutical products (functional cosmetics, dermaceuticals or active cosmetics), i.e., topical hybrid products with cosmetic-pharmaceutical characteristics containing active ingredients having effect on user's skin, hair and/or nails, at higher and more effective concentrations, therefore they are located in an intermediate level between cosmetic and drug. Illustrative examples of cosmeceutical products include essential oils, ceramides, enzymes, minerals, peptides, vitamins, etc.

As used herein, the term "nutraceutical product" refers to a product suitable for use in human beings or animals, comprising one or more natural products with therapeutic action which provide a health benefit or have been associated with disease prevention or reduction, and it includes dietary supplements presented in a non-food matrix (e.g., capsules, powder, etc.) of a concentrated natural bioactive product usually present (or not) in the foods and which, when taken in a dose higher than that existing in those foods, exerts a favorable effect on health which is greater than effect which the normal food may have. Therefore, the term "nutraceutical product" includes isolated or purified food products as well as additives or food supplements which are generally presented in dosage forms normally used orally, for example, capsules, tablets, sachets, drinkable phials, etc.; such products provide a physiological benefit or protection against diseases, generally against chronic diseases. If desired, the nutraceutical product provided by the invention can contain, in addition to the composition of the invention, one or more nutraceuticals (products or substances associated with disease prevention or reduction), for example, flavonoids, omega-3 fatty acids, etc., and/or one or more prebiotics (non-digestible food ingredients which stimulate probiotic activity and/or growth), for example, oligofructose, pectin, inulin, galacto-oligosaccharides, lactulose, human milk oligosaccharides, dietary fiber, etc.

In certain embodiments, the product (consumable or food product, pharmaceutical, cosmeceutical, nutraceutical or cosmetic product) has a pH of less than 6, such as less than 5pH, such as less than 4, such as less than 3, or such as less than 2.

In certain embodiments, the product (consumable or food product, pharmaceutical, cosmeceutical, nutraceutical or cosmetic product) has been treated to a thermal treatment and/ or is exposure to light.

The present invention is further illustrated by means of the following non-limiting examples.

EXAMPLES

Materials and methods.

Phycocyanin extract

Phycocyanin is extracted with water from spirulina (*Arthrospira platensis*), followed by filtration, purification and concentration of the extract, the powder form of phycocyanin is obtained by spray drying using maltodextrin as a carrier. The final extract contains 25%wt of total phycocyanin including C-phycocyanin and allo-phycocyanin calculated as described by Yoshikawa and Belay (2008) J AOAC Int. May-Jun 2008;91(3):524-9.

Potato protein: Potato proteins were purchased from AVEBE (Netherlands). Protein was isolated from potato by water extraction followed by purification, concentration and finally drying. Protein content in the final extract is higher than 90% w/w (dry weight).

Mung beans peptides: Sample was purchased from Nutraonly (China), proteins were first extracted with water then hydrolysed using enzymes to obtain peptides. Peptides content is >90% (W:W).

Rice peptides: Sample was purchased from Organicway (china). Rice proteins were first extracted from raw

materials; peptides are then obtained by enzymatic hydrolysis followed by sterilization, filtration, and concentration and finally spray drying. Peptide content is >90% (/dry weight) with molecular weights ranging from 200Da to 4000Da, with a majority between 300 to 2000/1000 Da.

Pea peptides: Pea peptides were purchased from Aromiens (United States). Pea proteins were first extracted with water, macro peptides were obtained under enzymolysis of protein extract, enzymes were then destructed by thermal treatment. Peptides were separated by centrifugation then purified using membrane filtration. After sterilization, powder extract was obtained by spray drying. Peptide content is >80% (dry weight) with molecular weights ranging from 500Da to 3000Da, with a majority between 800 to 2000 Da.

Soy peptides: Soy peptides were purchased from Aromiens (United States). Soy proteins were first extracted with water, peptides were obtained under enzymatic hydrolysis of protein extract. Enzymes were then thermally denatured. Peptides were separated by centrifugation then purified using membrane filtration. After concentration, extract was sterilized and finally formulated in powder form by spray drying. Peptide content is >80% with molecular weights ranging from 200Da to 2000Da, with a majority between 300 to 1000 Da-.Example 1. Assessment of phycocyanin stability against heating in sugar syrup matrix, pH3 (for confectionary applications):

0.025g of spirulina blue extract powder (25% of total phycocyanin w/w) was dissolved into 1mL of distilled water. 0.150g of protein, peptides or a mixture of them (1:1 W/W) was slowly poured into the blue spirulina extract solution under continuous stirring for 30min. The blend was then introduced in 99g of sugar syrup Brix°60, pH3 and mixed for 20min.

The sugar syrups were measured on the spectrophotometer (Konica Minolta) for evaluation of initial L,a,b parameters and set as a reference.

Samples were then submitted to thermal treatment during 30min at 80°C using water bath.

After heating, mixtures were measured again against the initial reference for the evaluation of difference of L,a,b and DE2000 parameters.

Sample 1A: 0.025%spirulina extract (25% Phycocyanin w:w) + 99.97%sugar syrup Brix (B) °60, pH3. Sample 1B: 0.025%spirulina extract + 0.15%yeast proteins extract + 99.82%sugar syrup B°60, pH3. Sample 1C: 0.025%spirulina extract + 0.15%whey protein isolate + 99.82%sugar syrup B°60, pH3. Sample 1D: 0.025%spirulina extract + 0.15%potato protein extract + 99.82%sugar syrup B°60, pH3. Sample 1E: 0.025%spirulina extract + 0.075%potato protein extract+0.075%rice peptides + 99.82%sugar syrup B°60, pH3.

Sample 1F: 0.025%spirulina extract + 0.15%rice peptides + 99.82%sugar syrup B°60, pH3.

Sample 1G: 0.025%spirulina extract + 0.15%Mung bean peptides+ 99.82%sugar syrup B°60, pH3. Sample 1H: 0.025%spirulina extract + 0.075%Mung bean peptides+0.075%potato protein+ 99.82%sugar syrup B°60, pH3.

Sample 1I: 0.025%spirulina extract + 0.15%soy peptide +99.82%sugar syrup B°60, pH3. Sample 1J: +0.025%spirulina extract + 0.15%pea peptide +99.82%sugar syrup B°60, pH3.

Sample 1K: 0.025%spirulina extract + 0.075%pea peptide +0.075% potato protein+99.82%sugar syrup B°60, pH3.

Sample 1L: 0.025%spirulina extract + 0.075%soy peptide +0.075% potato protein+99.82%sugar syrup B°60, pH3.

Sample 1M: 0.025%spirulina extract + 0.075%mung bean protein +0.075% potato protein+99.82%sugar syrup B°60, pH3.

Table1.

| sample | L | a | b | DE2000 |
|---|---|---|---|---|
| 1A R (reference with treatment) | 87.19 | -22.68 | -20.06 | --- |
| 1A T (treatment at 80°C 30min) | 95.29 | -7.43 | -3.44 | 13.94 |
| 1B R (reference) | 83.68 | -22.59 | -16.69 | --- |
| 1B T (80°C for 30min) | 87.61 | -13.73 | -8.31 | 6.96 |
| 1C R (reference) | 82.48 | -23.55 | -17.54 | --- |
| 1C T (80°C for 30min) | 81.60 | -17.24 | -11.41 | 4.33 |
| 1D R(reference) | 89.26 | -17.48 | 23.13 | --- |
| 1D T (80°C for 30min) | 93.13 | -10.90 | -7.66 | 6.35 |
| 1E R (reference) | 86.07 | -23.31 | -19.38 | --- |
| 1E T (80°C for 30min) | 86.83 | -17.91 | -14.01 | 3.59 |
| 1F R(reference) | 86.87 | -22.76 | -17.96 | --- |

(continued)

| sample | L | a | b | DE2000 |
|---|---|---|---|---|
| 1F T(80°C for 30min) | 89.38 | -17.19 | -12.99 | 3.95 |
| 1G R (reference) | 83.54 | -27.37 | -24.07 | --- |
| 1G T (80°C for 30min) | 86.76 | -20.11 | -17.50 | 4.60 |
| 1H (reference) | 85.73 | -22.62 | -18.42 | --- |
| 80°C for 30min | 85.86 | -18.02 | -13.61 | 3.16 |
| 1I (reference) | 88.32 | -20.56 | -16.85 | --- |
| 1I 80°C for 30min | 90.56 | -15.94 | -12.49 | 3.53 |
| 1J (reference) | 87.40 | -22.22 | -18.63 | --- |
| 1J 80°C for 30min | 89.39 | -17.54 | -14.35 | 3.27 |
| 1K (reference) | 88.05 | -21.46 | -18.55 | --- |
| 1K 80°C for 30min | 88.69 | -18.06 | -15.67 | 2.15 |
| 1L (reference) | 87.65 | -22.35 | -18.86 | --- |
| 1L 80°C for 30min | 87.87 | -18.01 | -15.06 | 2.82 |
| 1M (reference) | 87.48 | -19.71 | -17.17 | --- |
| 1M 80°C for 30min | 87.70 | -16.26 | -14.37 | 2.27 |

Compared to the control (1A: control including only spirulina extract), sample containing different protein candidates showed better colour retention. Specifically, potato proteins and mung bean peptides, pea peptides and potato proteins and soy peptides and potato proteins improved the stability of phycocyanin. Interestingly the mixture of them leads to a significant improvement in the colour stability (figure 1H,1K and 1L) which suggests that there is a synergy effect between the potato proteins and mung bean peptides, potato proteins and pea peptides or potato proteins and soy peptides.

Example 2: Kinetic of degradation absorption measurement

Figure 2A and 2B shows the evolution of the phycocyanin retention upon thermal treatment. PC retention of phycocyanin was measured by UV-Vis absorption and can be identified as a ratio between the absorbance after thermal treatment and before heating. Results showed a significant improvement of phycocyanin retention when combined with potato and mung bean peptide (Sample B: 0.025%spirulina extract + 0.075%Mung bean peptides+0.075%potato protein+ 99.82%sugar syrup B°60, pH3) if compared with a control sample A (retention: 0.91 vs 0.34) (Sample A: Sample 1A: 0.025%spirulina extract (25% Phycocyanin w:w) + 99.97%sugar syrup Brix (B) °60, pH3)

Example 3: Whey protein isolate precipitation

0.1g of spirulina blue liquid extract (25% of total phycocyanin w/w) was dissolved into 1mL of distilled water. 0.2g of protein, peptides or o a mixture of them (1:1W/W) was incorporated into the blue spirulina extract solution under continuous stirring for 30min. The blend was then added to 99g of beverage Brix°10, pH3.5 and mixed using the magnetic stirrer (300rpm) for 10min.

Beverage Composition: 89.96% water + 10% sucrose + 0.025% potassium sorbate + 0.015% sodium benzoate

Final pH was fixed to 3.5 with citric acid.

Beverages were measured on the spectrophotometer (Konica Minolta) for evaluation of initial L,a,b parameters and set as a reference.
Samples were then submitted to thermal treatment during 5min at 95°C using water bath.
After heating, samples were measured again against the initial reference for the evaluation of difference of L,a,b and DE2000 parameters.

Table 2.

| Sample | % | Ingredient |
|---|---|---|
| sample 3A | 0.1% | spirulina extract |
| | 0.2% | whey protein isolate |
| | 99.7% | beverages, pH3.5 Brix10 |
| sample 3B: | 0.1% | spirulina extract |
| | 99.9% | beverages, pH3.5 Brix10 |
| sample 3C | 0.1% | spirulina extract |
| | 0.2% | potato protein |
| | 99.7% | beverages, pH3.5 Brix10 |

Results:

Table 3.

| sample | 3A | 3B | 3C |
|---|---|---|---|
| DE2000 | 33.93 | 27.82 | 15.93 |

Interpretation: As we can see in figure 3 compared to control sample (B) whey protein (A) did not prevent precipitation after thermal treatment (AT), while potato protein (CT) enhanced the colloidal stability of phycocyanin even after long thermal treatment at high temperature (95°C for 5min).

Example 4. improvement of colloidal, heat and light stability in beverages application

0.15g of spirulina blue liquid extract (7% of total phycocyanin w/w) was dissolved into 1mL of distilled water. 0.05g of protein, peptides or o a mixture of them (1:1W/W) was incorporated into the blue spirulina extract solution under continuous stirring for 30min. The blend was filtered using 0.125 filter first then added to 99g of beverage Brix°10, pH3.5 and mixed using the magnetic stirrer (300rpm) for 10min.

Beverage Composition: 89.96% water + 10% sucrose + 0.025% potassium sorbate + 0.015% sodium benzoate

Final pH was fixed to 3.5 with citric acid.

Beverages were measured on the spectrophotometer (Konica Minolta) for evaluation of initial L,a,b parameters and set as a reference.

Samples were then submitted to thermal treatment during 1min at 90°C using water bath (AT, BT and CT).

After heating, samples were measured again against the initial reference for the evaluation of difference of L,a,b and DE2000 parameters.

In order to assess the light stability samples were then continuously exposed to light. Colour loss was measured on the spectrophotometer (Konica Minolta) for evaluation of initial L,a,b parameters and set as a reference.

Sample 4A: 0.1%spirulina extract (7% of total phycocyanin w/w) + 0.05%potato protein + 99.85%beverage B°10, pH3.5

Sample 4B: 0.1%spirulina extract (7% of total phycocyanin w/w) + 0.025%potato protein+0.025%mung bean peptides +99.85%beverage B°10, pH3.5

Sample 4C: 0.1%spirulina extract (7% of total phycocyanin w/w) + 99.90%beverage B°10, pH3.5

Samples AT, BT and CT are the samples A, B and C after the thermal treatment (90°C for 1min)

Table 4. Results after thermal treatment, heat stability, colloidal stability.

| sample | L | a | b | DE2000 |
|---|---|---|---|---|
| 4A (reference) | 95.95 | -10.07 | -9.68 | --- |
| 4AT 90°C for 1min | 96.30 | -9.42 | -8.98 | 0.70 |
| 4B (reference) | 92.59 | -14.84 | -14.63 | --- |
| 4BT: 90°C for 1mi | 93.15 | -14.42 | -14.19 | 0.48 |
| 4C (reference) | 90.19 | -15.79 | 20.15 | --- |
| 4CT: 90°C for 1 mi | 94.42 | -2.52 | 6.58 | 10.13 |

Figure 4A and Table 4 showed that potato protein (4AT and 4BT) and mixture of potato protein and mung bean peptides showed a an improvement of the colloidal stability which prevents the sedimentation of phycocyanin at pH3.5 (very close to PC IEP) even after thermal treatment at 90°C for 1 min, colour retention was also significantly improved.

Light stability started (shelf life): Figure 4B and 4C.

Samples of beverages AT, BT and CT (after the heat treatment) were measured on the spectrophotometer (Konica Minolta) for evaluation of initial L,a,b parameters and set as a reference before light exposure. Then samples were exposure to light and different measurements at different times were done. Results (Figure 4B) from this example showed that compared to the control (sample 4CT) both 4AT and 4BT showed again a significant enhancement of the colloidal stability maintained in time after 13 days of light exposure. In addition Sample 4BT comprising the mung bean peptide and potato protein (sample showed the best colour retention even under continuous of heat treatment and exposure to light, (see fig 4C, day 13) which suggests that these ingredients preserved the phycoctyanin from photo oxidation in addition to the heat stability.

Example 5. Albumin

Protocol

We investigated the impact of Albumin protein on the stabilization of phycocyanin in sugar syrup matrix pH3 containing 0.025% of spirulina extract (25% of phycocyanin W/W), as previously done in example 1. Albumin from chicken egg white and from bovine serum (BSA) were added at different level ranging from 0.05% to 0.2% (W:W). Initial absorption at 618nm of mixtures were measured. Samples were then submitted to thermal treatment during 30min at 80°C using water bath.

After heating, absorptions were measured again and colour retention percentage was determined by absorption ratio:

$$\%Phyocyanin\ retention = \frac{Abs_{after\ heating}^{618nm}}{Abs_{before\ heating}^{618nm}} * 100$$

Samples:

Sample 5A: 0.025%spirulina extract + 0.05%BSA + 99.92%sugar syrup B°60, pH3

Sample 5B: 0.025%spirulina extract + 0.1%BSA + 99.87%sugar syrup B°60, pH3

Sample 5C: 0.025%spirulina extract + 0.2%BSA + 99.77%sugar syrup B°60, pH3

Sample 5D: 0.025%spirulina extract + 99.97%sugar syrup B°60, pH3

Sample 5E: 0.025%spirulina extract + 0.05%chicken egg white + 99.92%sugar syrup B°60, pH3

Sample 5F: 0.025%spirulina extract + 0.1%chicken egg white+ 99.87%sugar syrup B°60, pH3

Sample 5G: 0.025%spirulina extract + 0.2%chlcken egg white + 99.77%sugar syrup B°60, pH3

Results:

Table 5

| Sample | L | a | b | DE2000 |
|---|---|---|---|---|
| 5A (reference) | 88.88 | -18.54 | -16.94 | --- |
| 5A 80°C for 30min | 93.65 | -9.93 | 13.26 | 7.51 |
| 5B (reference) | 83.68 | -17.56 | -15.00 | --- |
| 5B 80°C for 30min | 87.80 | 8.12 | -5.11 | 9.04 |
| 5C (reference) | 83.31 | -17.83 | -15.49 | --- |
| 5C 80°C for 30min | 87.90 | -8.06 | -5.06 | 9.43 |
| 5D (reference) | 89.15 | -20.12 | -19.60 | --- |
| 5D 80°C for 30min | 97.61 | -4.73 | -1.69 | 15.66 |
| 5E (reference) | 90.71 | -17.05 | -16.38 | --- |
| 5E 80°C for 30min | 90.54 | -13.29 | -10.73 | 3.70 |
| 5F (reference) | 80.36 | -22.70 | -19.96 | --- |
| 5F 80°C for 30 min | 83.37 | -14.01 | -9.66 | 7.09 |
| 5G (reference) | 85.33 | -15.79 | -12.94 | --- |
| 5G 80°C for 30 min | 88.36 | -8.91 | -5.38 | 6.91 |

As we can see from figure 5A and table 5, albumin from chicken egg white improved the retention of phycocyanin, bovine serum Albumin improved slightly the retention of Phycocyanin. This difference could be explained by the variation of albumins structures from these animal sources.

These results suggest that Albumin structure could effectively contribute to the stabilization of Phycocyanin, the high Phycocyanin retention obtained with the mixture of potato proteins and mung bean can be explained by the presence of other proteins and peptides fractions that can give further improvement such as globulins, prolamins etc.

Figure 5B shows the evolution of Phycocyanin retention in function of bovine serum albumin concentration (left) and the evolution of Phycocyanin retention in function of bovine serum albumin concentration.

## Claims

**1.** Composition comprising at least one phycobilin and at least one protein, polypeptide and/or peptide, wherein the at least one protein, polypeptide and/or peptide is soluble in water and optionally has an IEP of more than 4 and/or is soluble in acidic conditions.

**2.** Complex of at least one phycobilin and at least one protein, polypeptide and/or peptide obtainable by mixing the at least one protein, polypeptide and/or peptide with a composition comprising at least one phycobilins in an aqueous solution wherein the at least one protein, polypeptide and/or peptide is soluble in water, has an IEP of more than 4 and/or is soluble in acidic conditions.

**3.** A complex comprising

(i) at least one phycobilin; and
(ii) at least one protein extract comprising one or more peptide, polypeptide and/or proteins obtainable by mixing the at least one protein extract with a composition comprising at least one phycobilin in an aqueous solution, wherein the at least one protein, polypeptide and/or peptide is soluble in water, has an IEP of more than 4 and/or is soluble in acidic conditions.

4. The composition or the complex according to any one of claims 1 to 4, wherein the protein, polypeptide and/or peptide or the protein extract is obtained from:

a) tubers including but not limited to potatoes (*Solanum tuberosum*) and any of the described varieties of potato (such as russet potatoes (rough brown skin), red potatoes, white potatoes, yellow potatoes (also called Yukon potatoes) and purple potatoes), sweet potato *(Ipomoea batatas),* manioc or yucca (*Manihot esculenta*), dahlia, carrot (*Daucus carota subsp. sativus*), radish, beetroot, etc;
b) beans including but not limited to mung beans, black beans, canelli beans, kidney beans, lentil beans, lima beans, pinto beans, soy beans, white beans, mung beans, fava beans and mixtures thereof,
c) nuts including but not limited to almonds, brazil nuts, cashews, peanuts, pecans, hazelnuts, pine nuts, walnuts, pistachios, and mixtures thereof,
d) plant seeds including but not limited to peas, chia, flax, hemp, pumpkin, sesame, sunflower, quinoa, chickpeas, green peas, oilseed rape/canola and mixtures thereof,
e) from cereals including but not limited to oat, wheat, barley, spelt, corn, rice and mixtures thereof, and/or
f) egg, milk, and any other animal source rich in proteins.

5. The composition or the complex according to any of the preceding claims, wherein the at least one protein, polypeptide and/or peptide is selected from albumins, globulins, glutelines, prolamines, lectin, gliadin, tuberine, patatin and mixtures thereof, and/or polypeptides and/or peptides derived therefrom.

6. The composition or the complex according to claim 5, wherein the composition or the complex comprises at least one albumin from potato and optionally comprises polypeptides and/or peptides derived from peas, soy, mung beans, and/or rice.

7. The composition or the complex according to any of the preceding claims, wherein the polypeptides and/or peptides have a molecular weight of from 200 to about 6000 daltons, 300 to about 5,000 daltons, such as from 300 to 2000 daltons, such as from 300 to 1000 daltons, such as from 500 to 2000 dalton, such as from 500 to 1000 daltons.

8. Method for stabilizing a phycobilin comprising the steps of:

(i) contacting a phycobilin with at least one protein, polypeptide and/or peptide as defined in any of the preceding claims or a protein extract comprising at least one protein, polypeptide and/or peptide as defined in any of the preceding claims in a water solution, and
(ii) optionally adding sugars.

9. The composition, the complex or method according to any of the preceding claims, wherein the phycobilin is selected from phycoerythrobilin, phycocyanobilin, phycoviolobilin, phycourobilin and mixtures thereof.

10. The composition, the complex or method according to any of the preceding claims, wherein the phycocyanobilin is a phycocyanin obtained from *Arthrospira platensis* (also named as Spirulina), *Arthrospira fusiformis, Arthrospira maxima, Galdieria daedala, Galdieria sulphuraria, Galdieria maxima, Galdieria partita, Cyanidioschyzon merolae 10D, Cyanidioschyzon merolae DBV201, Cyanidium caldarium, Cyanidium rumpens, Cyanidium daedalum, Cyanidium maximum, Cyanidium partitum,* and any mixtures thereof.

11. The composition, the complex or the method according to any of the preceding claims, wherein the ratio of the at least one protein to the at least one polypeptide and/or peptide is from about from about 100:1 to 1:100, such as 90:10, 80:20; 70:30, 60:40, 50:50, 40:60, 30:70, 20:80, or 10:90.

12. The composition, the complex or the method according to any of the preceding claims, wherein the ratio of the phycobilin to the at least one peptide, polypeptide and/or protein is in the from about 10:90 to about 90:10, or from about 20:80 to about 80:20, or from about 30:70 to about 70:30, or from about 40:60 to about 60:40, or from about 45:55 to about 55:45, about 50:1 to about 1:50, such as from about 40:1 to about 1:40, such as such as from about 30:1 to about 1:30, such as from about 20:1 to about 1:20, such as from about 10:1 to about 1:10, such as 1:1, 1:2, 1:3, 3:1, 2:1, 0.5:1, or about 0.8:2.

13. The composition, the complex or method according to any of the preceding claims wherein the phycobilin is a phycocyanin, the protein is potato protein and the peptides and/or polypeptides are from mung bean, soy, rice and/or

pea and the ratio between them is from about 0.008:1:1 to about of 0.8:1:1.

**14.** The composition or complex according to any of the preceding claims or a stabilized phycobilin obtained using the method of any of claims 8 to 13, **characterized by** having a colour which is stable at a pH of less than about 6, such as at a pH of less than about of 5, such as at a pH of less than about 5, such as a pH less than about 4, such as a pH less than about 3, or such as a pH less than about 2, and optionally is heat stable and/or light stable.

**15.** A consumable, a pharmaceutical, a cosmeceutical, a nutraceutical or cosmetic product comprising the composition or the complex according to any of claims 1 to 14, or the stabilized phycobilin according to any of claims 8 to 15, optionally that was exposed to light and/or that was submitted to a thermal treatment and/or has a pH of less than 5, such as less than 4, such as less than 3, or such as less than 2.

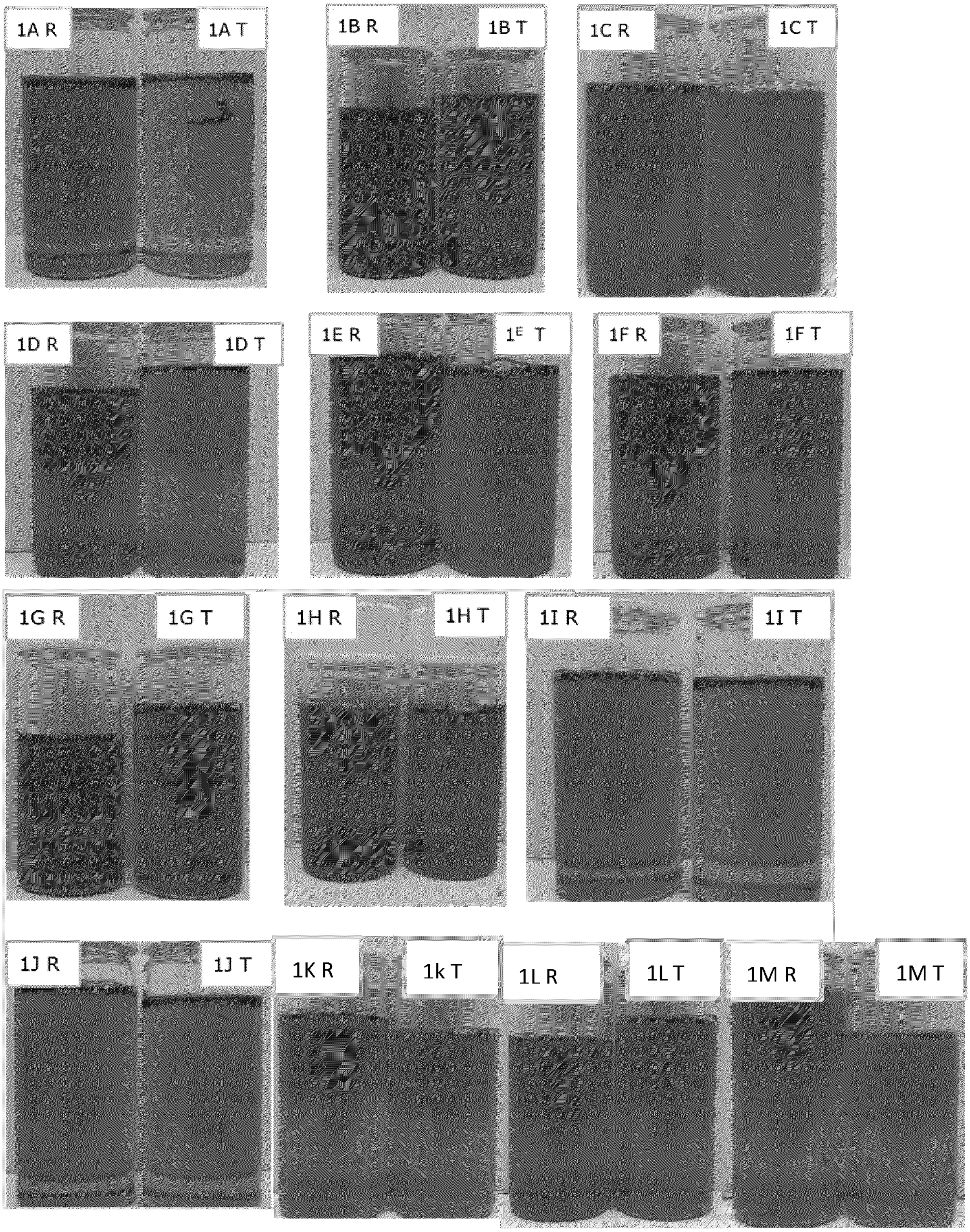
1A R
1A T
1B R
1B T
1C R
1C T
1D R
1D T
1E R
1E T
1F R
1F T
1G R
1G T
1H R
1H T
1I R
1I T
1J R
1J T
1K R
1k T
1L R
1L T
1M R
1M T

**Figure 1A**

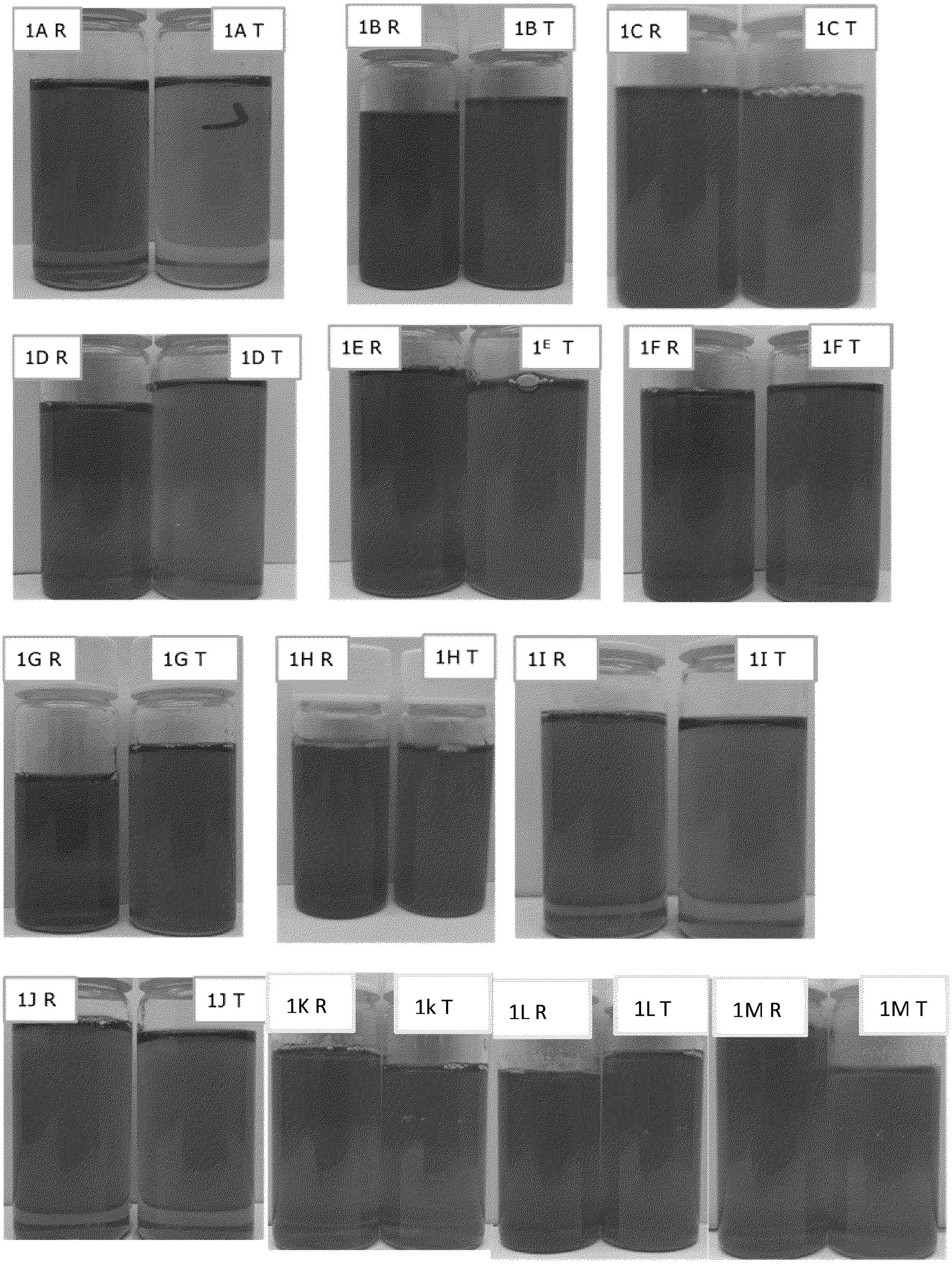
1A R
1A T
1B R
1B T
1C R
1C T
1D R
1D T
1E R
1E T
1F R
1F T
1G R
1G T
1H R
1H T
1I R
1I T
1J R
1J T
1K R
1k T
1L R
1L T
1M R
1M T

**Figure 1B**

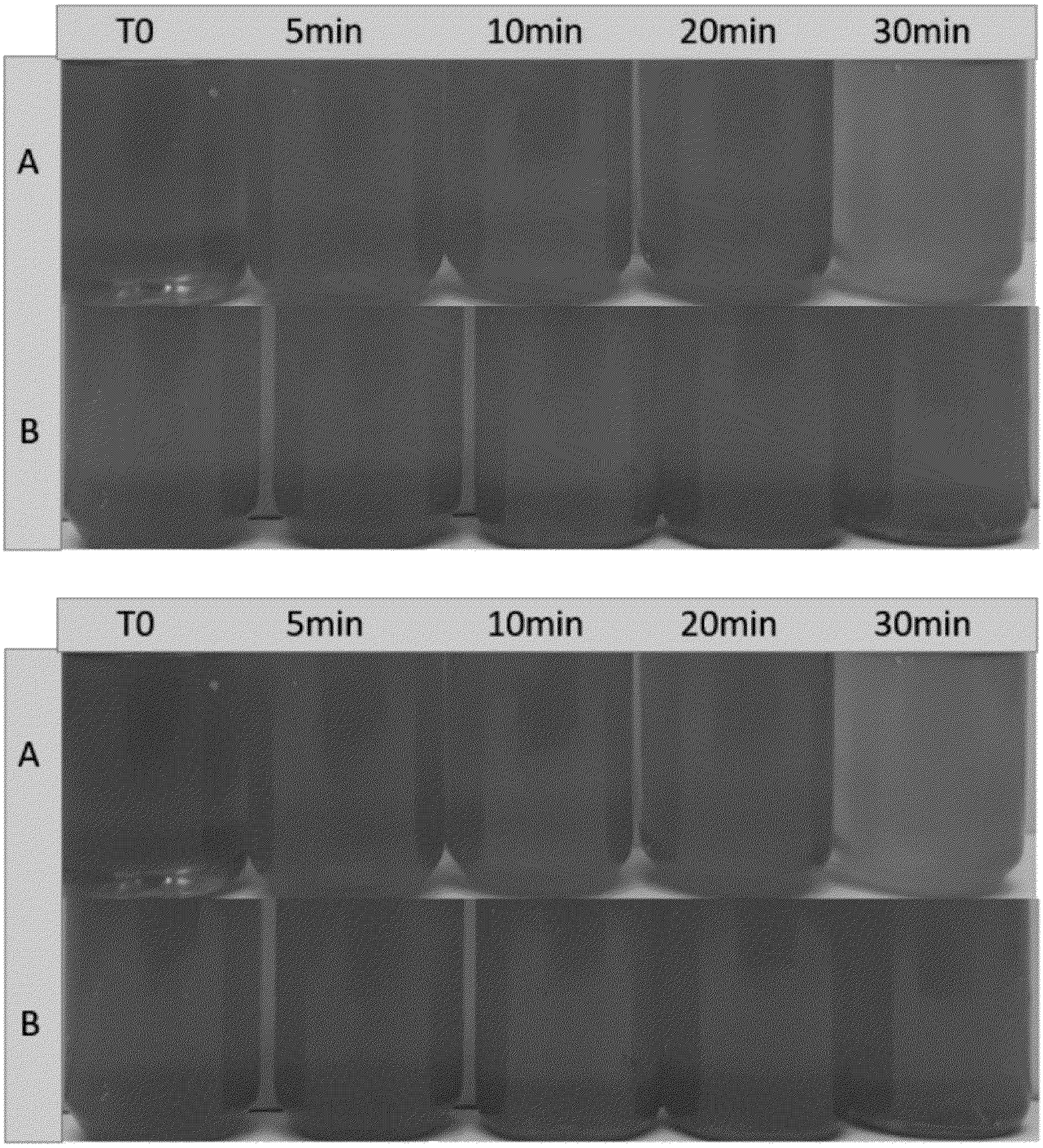


Figure 2A

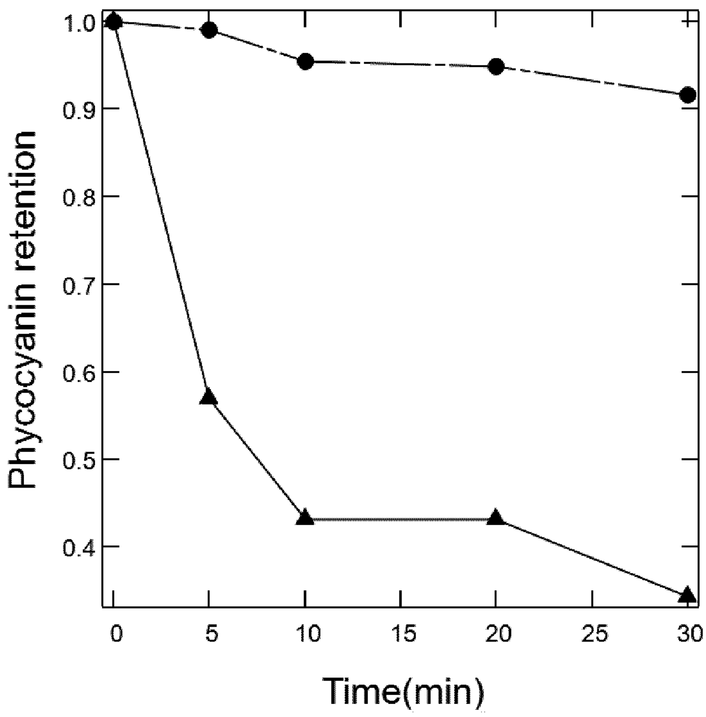
Phycocyanin retention
1.0
0.9
0.8
0.7
0.6
0.5
0.4
0
5
10
15
20
25
30
Time(min)

**Figure 2B**

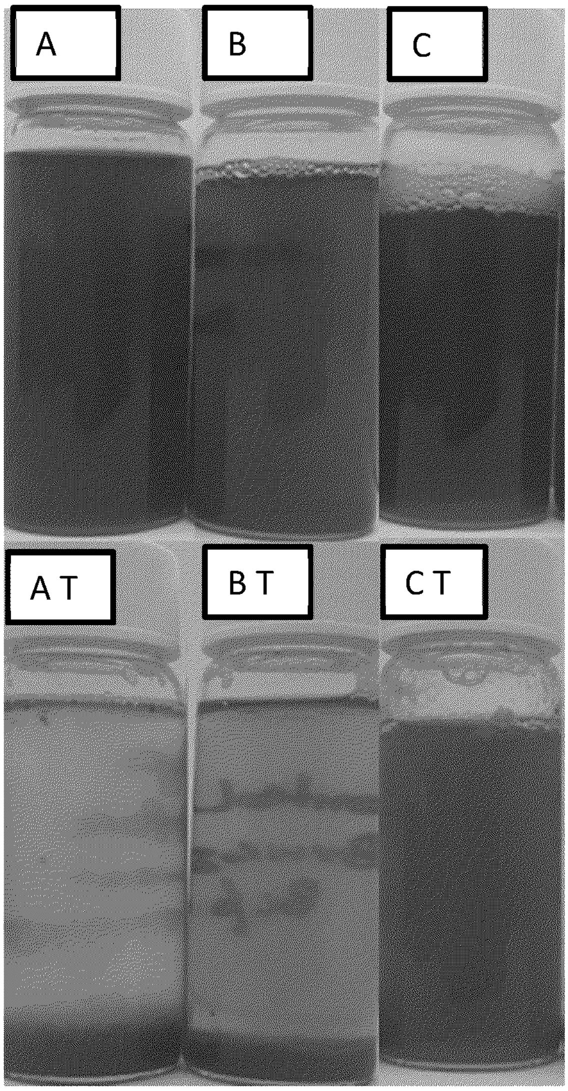


Figure 3

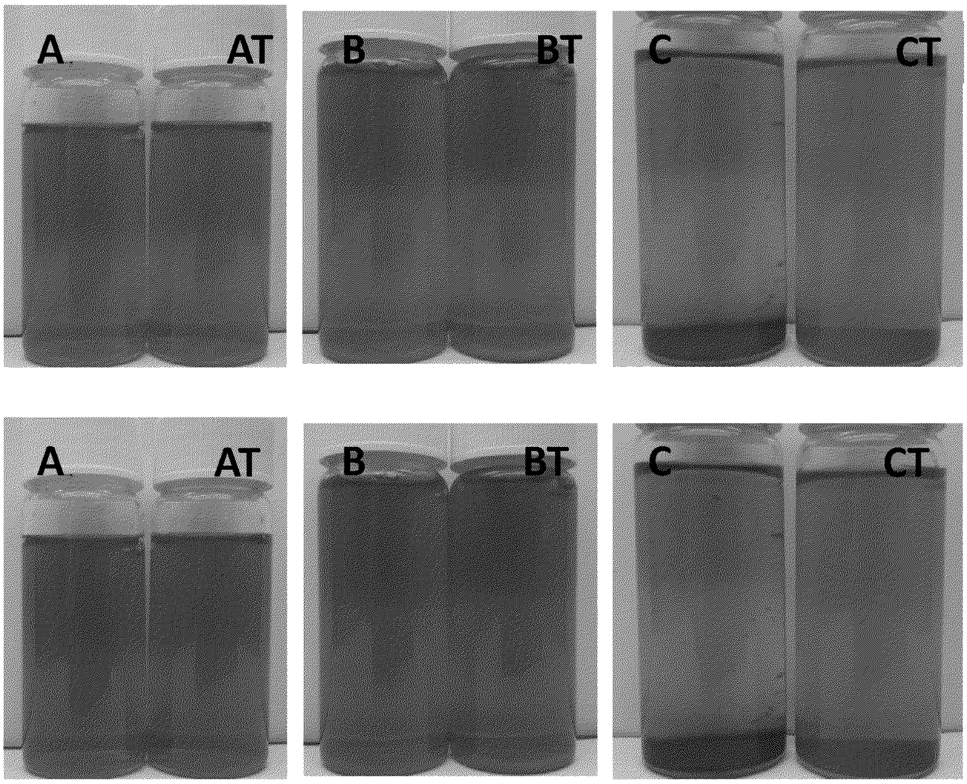


Figure 4A

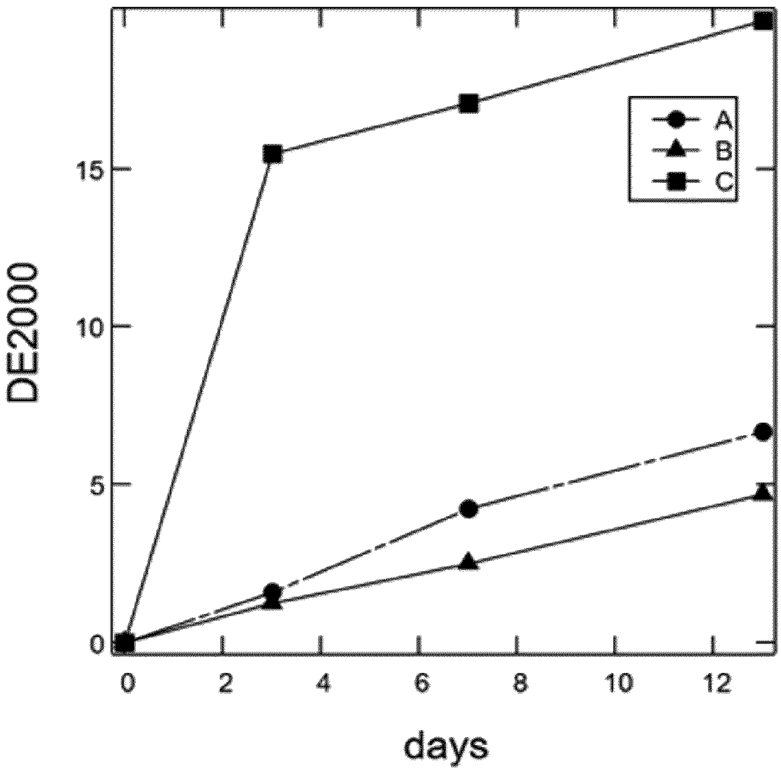


Figure 4B

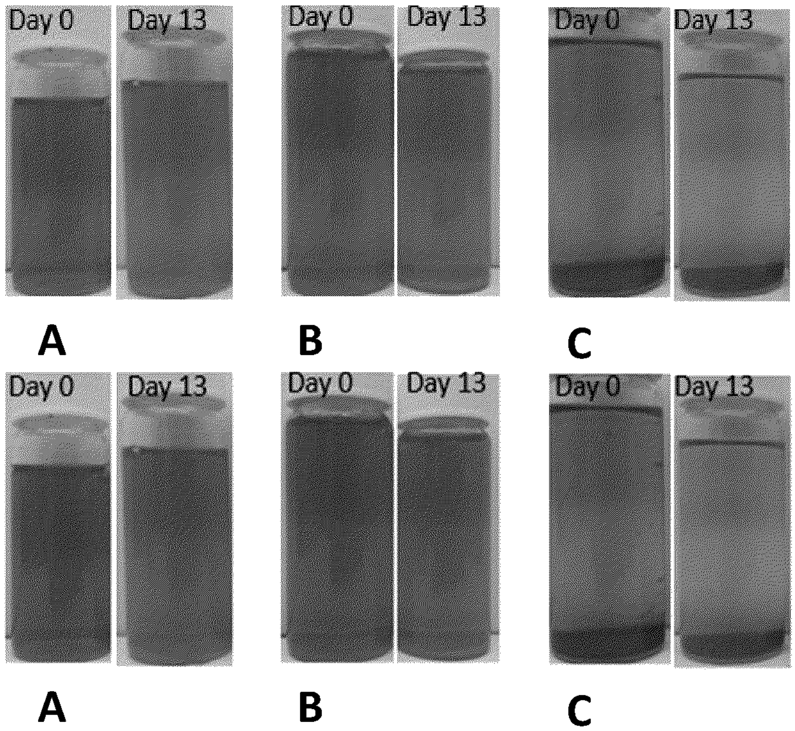


Figure 4C

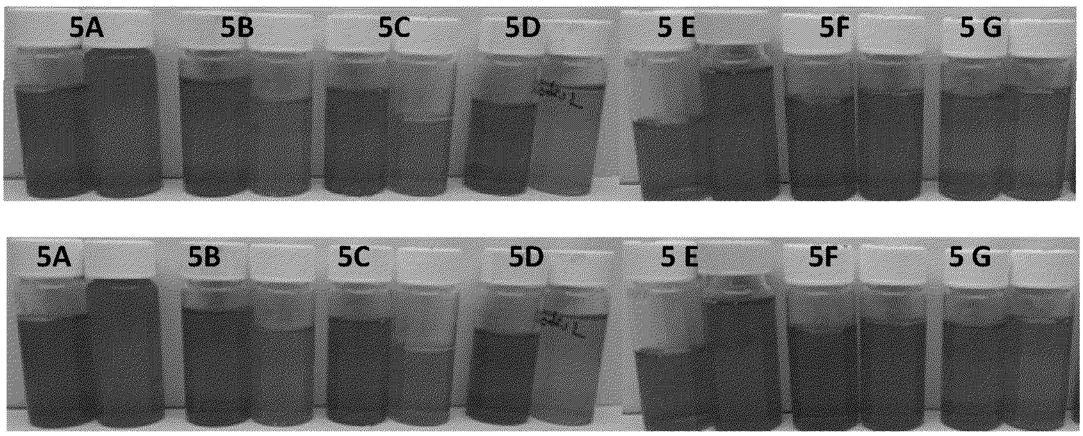


Figure 5A

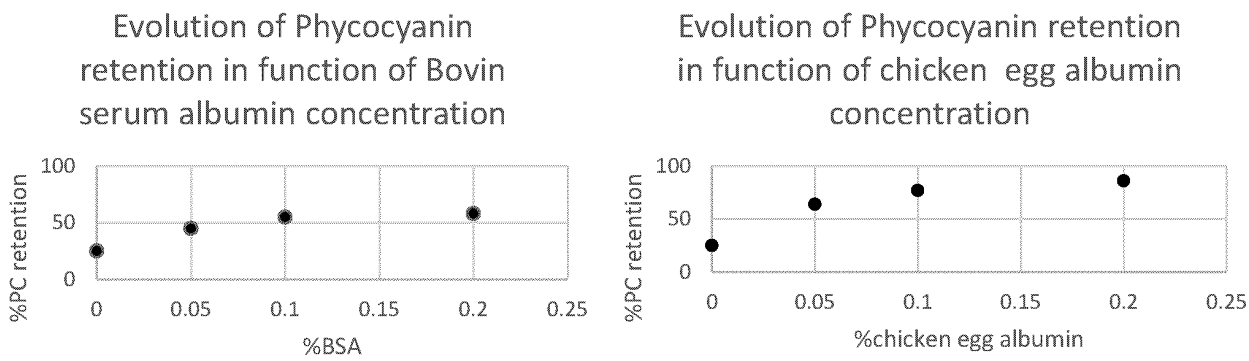
Evolution of Phycocyanin retention in function of Bovin serum albumin concentration
%PC retention
100
50
0
0
0.05
0.1
0.15
0.2
0.25
%BSA
Evolution of Phycocyanin retention in function of chicken egg albumin concentration
%PC retention
100
50
0
0
0.05
0.1
0.15
0.2
0.25
%chicken egg albumin

**Figure 5B**

Europäisches Patentamt
European Patent Office
Office européen des brevets

# EUROPEAN SEARCH REPORT

Application Number
EP 21 21 0046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 2012/104091 A1 (WILD GMBH & CO KG RUDOLF [DE]; HEYDE ANNETT [DE] ET AL.) 9 August 2012 (2012-08-09)<br>* page 5, line 23 - page 6, line 16 *<br>* page 6, line 23 - page 7, line 21 *<br>* page 9, line 21 - page 10, line 4; claims 1-14; examples 1-3 * | 1-3,5, 8-10,12, 14,15<br>4,5,7 | INV.<br>A23L5/46<br>A23L2/58<br>A23L33/18<br>A23L33/185<br>A23L33/19 |
| X<br><br><br>Y | BATISTA A P ET AL: "Rheological characterization of coloured oil-in-water food emulsions with lutein and phycocyanin added to the oil and aqueous phases", FOOD HYDROCOLLOIDS, ELSEVIER BV, NL, vol. 20, no. 1, 1 January 2006 (2006-01-01), pages 44-52, XP028011619, ISSN: 0268-005X, DOI: 10.1016/J.FOODHYD.2005.02.009 [retrieved on 2006-01-01]<br>* abstract *<br>* page 51, left-hand column, paragraph 2 * | 1-3, 8-10,12, 14,15<br>4,5,7 | |
| | | | TECHNICAL FIELDS SEARCHED (IPC) |
| X | MYOUNGHOON MOON ET AL: "Isolation and characterization of thermostable phycocyanin from Galdieria sulphuraria", KOREAN JOURNAL OF CHEMICAL ENGINEERING, vol. 31, no. 3, 15 January 2014 (2014-01-15), pages 490-495, XP055146911, ISSN: 0256-1115, DOI: 10.1007/s11814-013-0239-9<br>* page 491, left-hand column, paragraph 2 - page 492, left-hand column, paragraph 1 *<br>* page 493, right-hand column *<br>* page 494, right-hand column, paragraph 2; figure 5; table 2 * | 1-3,14, 15 | A23L |

-/--

The present search report has been drawn up for all claims

1

| Place of search | Date of completion of the search | Examiner |
|---|---|---|
| The Hague | 4 May 2022 | Kirchhoff, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 21 21 0046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FALKEBORG MIA FIILSØE ET AL: "Stabilising phycocyanin by anionic micelles", FOOD CHEMISTRY, ELSEVIER LTD, NL, vol. 239, 3 July 2017 (2017-07-03), pages 771-780, XP085162626, ISSN: 0308-8146, DOI: 10.1016/J.FOODCHEM.2017.07.007 * abstract * * page 772, left-hand column, paragraph 2 * | 1-3,14, 15 | |
| A | S. (MALIS) ARAD ET AL: "Natural pigments from red microalgae for use in foods and cosmetics", TRENDS IN FOOD SCIENCE & TECHNOLOGY, vol. 3, 1 January 1992 (1992-01-01), pages 92-97, XP055158212, ISSN: 0924-2244, DOI: 10.1016/0924-2244(92)90145-M * page 94, right-hand column, paragraph 6 - page 95, left-hand column, paragraph 3 * * page 96, left-hand column, paragraph 5 * | 1-15 | |
| A | LIU S ET AL: "Highly soluble and stable recombinant holo-phycocyanin alpha subunit expressed in Escherichia coli", BIOCHEMICAL ENGINEERING JOURNAL, ELSEVIER, AMSTERDAM, NL, vol. 48, no. 1, 15 December 2009 (2009-12-15), pages 58-64, XP026741534, ISSN: 1369-703X, DOI: 10.1016/J.BEJ.2009.08.006 [retrieved on 2009-08-21] * abstract * | 1-15 | TECHNICAL FIELDS SEARCHED (IPC) |

The present search report has been drawn up for all claims

1

| Place of search | Date of completion of the search | Examiner |
|---|---|---|
| The Hague | 4 May 2022 | Kirchhoff, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 21 0046

This annex lists the patent family members relating to the patent documents cited in the above-mentioned European search report. The members are as contained in the European Patent Office EDP file on
The European Patent Office is in no way liable for these particulars which are merely given for the purpose of information.

04-05-2022

| Patent document cited in search report | Publication date | Patent family member(s) | Publication date |
|---|---|---|---|
| WO 2012104091 A1 | 09-08-2012 | EP 2484230 A1 | 08-08-2012 |
| | | WO 2012104091 A1 | 09-08-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 15090697 A
- CN 111317142
- WO 2020239913 A

### Non-patent literature cited in the description


- **CHAIKLAHAN et al.** *Process biotechnology,* 2012, vol. 47, 659-664
- **SELIG et al.** *Food Hydrocolloids,* January 2018, vol. 74, 46-52
- **SILVEIRA, S. et al.** Optimization of phycocyanin extraction from Spirulina platensis using factorial design. *Bioresource Technology,* 2007, vol. 98 (8), 1629-1634
- **ILTER, I. et al.** Optimization of phycocyanin extraction from Spirulina platensis using different techniques. *Journal of Food Composition and Analysis,* 2018, vol. 70, 78-88
- **D-P. JAESCHKE et al.** Phycocyanin from Spirulina: A review of extraction methods and stability. *Journal of Food Research International,* 2021, vol. 143, 110314
- **RODRIGUEZ-SAONA , L.E. et al.** *J. Food Sci.,* 1999, vol. 64, 451-456
- **CUEVAS MONTILLA, E. et al.** *J. Agric. Food Chem.,* 2011, vol. 59, 3385-3390
- **YOSHIKAWA ; BELAY.** *J AOAC Int.,* 2008, vol. 91 (3), 524-9